# EUROPEAN PATENT APPLICATION

(11) **EP 4 674 708 A1**
(43) Date of publication of application: **07.01.2026**
(21) Application number: 23925707.4
(22) Date of filing: 06.03.2023
(51) Int. Cl.: B60T 13/12

(54) **CONTROL METHOD, BRAKE, BRAKING SYSTEM, VEHICLE, STORAGE MEDIUM, AND PRODUCT**

(71) Applicant: Shenzhen Yinwang Intelligent Technologies Co., Ltd., Shenzhen, Guangdong 518110 (CN)
(72) Inventor: WANG, Xing, Shenzhen, Guangdong 518129 (CN)
(74) Representative: Thun, Clemens
(86) International application number: PCT/CN2023/079923
(87) International publication number: WO 2024/182982

(57) **Abstract**

A control method, a brake (10), a braking system (3), a vehicle (1), a storage medium, and a product are provided. The brake (10) includes a friction plate (11), a piston cylinder (121), a piston (122), a first transmission member (123), and a second transmission member (21). The piston cylinder (121) and the piston (122) jointly enclose a brake cavity (171) for accommodating brake fluid. Two ends of the piston (122) are respectively connected to the friction plate (11) and one end of the first transmission member (123), and the second transmission member (21) is configured to be in transmission connection to the other end of the first transmission member (123) and a drive unit (22). In a process in which the brake fluid pushes the piston (122) to move, the drive unit (22) drives, via the second transmission member (21), the first transmission member (123) to move away from the piston (122) in a first direction, so that a relative spacing between the first transmission member (123) and the piston (122) is increased. In this way, a gap between the friction plate (11) and a brake disc (2) can be reduced after service braking ends.

## Description

### TECHNICAL FIELD

This application relates to the field of braking technologies, and in particular, to a control method, a brake, a braking system, a vehicle, a storage medium, and a product.

### BACKGROUND

As one of important parts of a vehicle, a braking system is directly related to comprehensive performance of the vehicle and safety of life and property. A main function of the braking system is to decelerate or even stop a traveling vehicle, keep a speed of a vehicle traveling downhill stable, and keep a stopped vehicle stationary.

The braking system in a related technology includes an electronically controlled service braking module and an electronically controlled parking braking module. The electronically controlled service braking module is configured to control the speed of the vehicle and even stop the vehicle. The electronically controlled parking braking module is configured to keep the stopped vehicle stationary. A motor of the electronically controlled parking braking module drives, via a lead screw part, a piston to move, so that friction plates are tightly held onto a brake disc of the vehicle, to implement parking braking. The electronically controlled service braking module controls brake fluid to push the piston to move, so that the friction plates are tightly held onto the brake disc of the vehicle, to implement service braking.

However, an existing braking system has a problem of long parking braking time.

### SUMMARY

Embodiments of this application provide a control method, a brake, a braking system, a vehicle, a storage medium, and a product, to adjust a gap between a friction plate and a brake disc in a service braking process, so that a parking braking stroke is reduced, thereby reducing parking braking time.

A first aspect of this application provides a brake, including a friction plate, a piston, a piston cylinder, a first transmission member, and a second transmission member. The piston is disposed inside the piston cylinder, one end of the piston is connected to the first transmission member, the other end of the piston is fastened to the friction plate, and the friction plate is disposed outside the piston cylinder. The second transmission member is in transmission connection to the first transmission member, the second transmission member is configured to connect to a drive unit, and the drive unit is configured to drive the second transmission member to rotate around a rotation axis parallel to a first direction. The first transmission member is configured to convert a rotational motion of the second transmission member into a linear motion of the piston in the first direction. When the first transmission member moves in the first direction, the first transmission member is always in transmission connection to the second transmission member, and is always connected to the piston.

In a process in which the brake in this embodiment of this application performs service braking, brake fluid is used to push the piston to drive the friction plate to move toward a brake disc of a vehicle, so that the friction plates securely clamp the brake disc, to implement service braking. In the service braking process, a driving force output by the drive unit is used to drive, via the second transmission member, the first transmission member to move relative to the piston. Because the brake fluid is in a high-pressure state in this case, a location of the piston remains unchanged, and further the first transmission member may move away from the piston in the first direction, so that a relative spacing between the piston and the first transmission member is increased. In this way, a gap between the friction plate and the brake disc can be reduced after service braking ends. Therefore, when parking braking is performed, a distance for which the friction plate travels toward the brake disc may be reduced, so that a parking braking stroke is reduced. This reduces parking braking time and improves parking efficiency.

In a possible implementation, an end that is of the piston and that faces away from the friction plate includes a fitting hole, the first transmission member includes a lead screw part, an axis of the lead screw part is parallel to the first direction, one end of the lead screw part is disposed inside the fitting hole and is connected to the piston, and the other end of the lead screw part is in transmission connection to the second transmission member.

The lead screw part may be used to convert the rotational motion into linear rotation, so that the lead screw part may drive the piston to move in the first direction, and the lead screw part may move in the first direction relative to the piston. Therefore, parking braking, adjustment of the gap between the friction plate and the brake disc, and the like can be implemented.

In a possible implementation, the end of the lead screw part is threadedly connected to the piston; or the end of the lead screw part and the piston are configured to constitute a ball screw mechanism.

In this way, in the service braking process, the piston may drive the lead screw part to move in the first direction, or the lead screw part may rotate after receiving the driving force transmitted by the second transmission member, so that a relative spacing between the piston and the lead screw part changes. In this way, a spacing between the friction plate and the brake disc is adjustable. In addition, when the brake fluid does not push the piston to move and the lead screw part rotates, the lead screw part may drive the piston to move linearly in the first direction, so that functions such as parking braking, friction plate quick reset, zero roll resistance traveling, and foreign object discharge during traveling can be implemented.

In a possible implementation, the second transmission member includes a spline hole that penetrates the second transmission member, and an axis of the spline hole is parallel to the first direction. An end that is of the first transmission member and that is close to the second transmission member is disposed inside the spline hole and is in spline connection to the second transmission member.

In this way, the first transmission member may slide in the first direction inside the second transmission member, so that the first transmission member may move together with the piston, or the first transmission member may slide axially inside the second transmission member relative to the piston. In addition, in a circumferential direction of the first transmission member, the first transmission member and the second transmission member fit each other, so that the second transmission member can drive the first transmission member to rotate, to ensure that the first transmission member can rotate automatically and can move axially relative to the piston.

In a possible implementation, an outer wall of an end that is of the first transmission member and that is close to the second transmission member includes a plurality of first grooves, each first groove extends in the first direction, and the plurality of first grooves are spaced apart in the circumferential direction of the first transmission member. The second transmission member includes a plurality of ball members and a third transmission member, the third transmission member is sleeved on an outer wall of the first transmission member and is configured to connect to the drive unit, an inner surface that is of the third transmission member and that faces the first transmission member includes a plurality of second grooves, each second groove extends in an axial direction of the second transmission member, the plurality of second grooves are spaced apart in a circumferential direction of the second transmission member, the plurality of second grooves are respectively in a one-to-one correspondence with the plurality of first grooves and the plurality of ball members, and two opposite ends of each ball member are respectively disposed inside the corresponding first groove and inside the corresponding second groove.

In this way, the first transmission member may slide in the first direction inside the second transmission member, so that the first transmission member may move together with the piston, or the first transmission member may slide axially inside the second transmission member relative to the piston. In addition, in the circumferential direction of the first transmission member, the first transmission member and the second transmission member fit each other, so that the second transmission member can drive the first transmission member to rotate, to ensure that the first transmission member can rotate automatically and can move axially relative to the piston. In addition, the second transmission member of such a structure is used, so that a friction force between the first transmission member and the second transmission member can be reduced, and further, resistance of sliding of the first transmission member in the second transmission member is reduced.

In a possible implementation, the brake further includes a plane bearing, the plane bearing is disposed inside the piston cylinder and is fastened to the piston cylinder, and the plane bearing is sleeved on the outer wall of the first transmission member and is movably connected to the first transmission member. The first transmission member includes a first extension part extending in a radial direction of the first transmission member, the first extension part is disposed between the plane bearing and the piston in the first direction, and the first extension part is configured to abut against an end face of an end that is of the plane bearing and that faces the piston.

It can be ensured, by using the plane bearing, that the first transmission member smoothly rotates relative to the piston cylinder. In addition, in a process in which the first transmission member drives the piston to move in the first direction, the piston cylinder axially supports the first transmission member in the first direction via the plane bearing, so that the first transmission member can bear sufficient axial load. In this way, the piston can move toward the brake disc.

In a possible implementation, the brake further includes an axial limiting mechanism, and the axial limiting mechanism is disposed inside the piston cylinder. When the first transmission member moves in the first direction, the axial limiting mechanism is configured to prevent the first transmission member from fluttering in the first direction.

In a possible implementation, the axial limiting mechanism includes an axial fitting part and an axial elastic part, the axial fitting part is fastened to an inner wall of the piston cylinder, an axis of the axial elastic part is parallel to an axis of the first transmission member, and two opposite ends of the axial elastic part are respectively connected to the axial fitting part and the outer wall of the first transmission member. The first transmission member can be prevented from fluttering in the first direction by using an elastic force of the axial elastic part.

In a possible implementation, there are a plurality of axial fitting parts and a plurality of axial elastic parts, the plurality of axial fitting parts are in a one-to-one correspondence with the plurality of axial elastic parts, the plurality of axial fitting parts are spaced apart in the circumferential direction of the first transmission member, and the plurality of axial elastic parts are spaced apart in the circumferential direction of the first transmission member. The first transmission member includes a second extension part extending in the radial direction of the first transmission member, the second extension part is disposed between the piston and the first extension part of the first transmission member in the first direction, the axial fitting part is located between the piston and the second extension part, and two opposite ends of each axial elastic part are respectively connected to the second extension part and the corresponding axial fitting part.

In a possible implementation, there are a plurality of axial fitting parts and a plurality of axial elastic parts, the plurality of axial fitting parts are in a one-to-one correspondence with the plurality of axial elastic parts, the plurality of axial fitting parts are spaced apart in the circumferential direction of the first transmission member, the plurality of axial elastic parts are spaced apart in the circumferential direction of the first transmission member, each axial fitting part is disposed between the first extension part of the first transmission member and the piston in the first direction, and two ends of each axial elastic part are respectively connected to the first extension part and the corresponding axial fitting part.

In a possible implementation, the brake further includes a guiding mechanism, a part of the guiding mechanism is disposed in the piston cylinder, the other part of the guiding mechanism is disposed in the first transmission member, and the guiding mechanism is configured to enable the piston to translate in the first direction.

In this way, when the brake fluid does not push the piston and the first transmission member rotates, the piston may be driven to move in the first direction, so that the friction plate may move toward or away from the brake disc, to implement functions such as parking braking, adjustment of the gap between the friction plate and the brake, friction plate quick reset, zero roll resistance traveling, and foreign object discharge during traveling.

In a possible implementation, the guiding mechanism is disposed inside the piston cylinder, the part of the guiding mechanism is disposed on the inner wall of the piston cylinder, and the other part of the guiding mechanism is disposed on the outer wall of the first transmission member.

The guiding mechanism is disposed inside the piston cylinder, to help improve structural compactness of the brake, and further reduce a volume of the brake.

In a possible implementation, the guiding mechanism includes at least one guiding group, each guiding group includes one guiding block and one guiding groove, one of the guiding block and the guiding groove in each guiding group is disposed on the inner wall of the piston cylinder, and the other of the guiding block and the guiding groove is disposed on an outer wall of the piston.

In this way, the piston does not rotate around the rotation axis parallel to the first direction, so that when the first transmission member rotates, the piston can be driven to translate in the first direction.

In a possible implementation, the piston cylinder is of a hollow structure, and an axis of the piston cylinder is parallel to an axis of the friction plate. The outer wall of the piston and the inner wall of the piston cylinder jointly define a brake cavity with a variable volume, the piston cylinder includes a fluid inlet opening in communication with the brake cavity, and the fluid inlet opening is configured to allow the brake fluid to enter and exit the brake cavity. The friction plate and the second transmission member are disposed outside the piston cylinder, the part of the first transmission member is disposed inside the piston cylinder, and the other part of the first transmission member is disposed outside the piston cylinder and is in transmission connection to the second transmission member.

The piston cylinder of such a structure is used, to help reduce the volume of the brake on the premise that the brake fluid is used to push the piston.

In a possible implementation, a limiting structure is provided between the piston and the piston cylinder, and the limiting structure is configured to determine a relative location between the piston and the piston cylinder when the piston moves in the first direction, for the volume of the brake cavity to reach a minimum.

In this way, when the piston moves away from the brake disc, the relative location between the piston and the piston cylinder can be determined. In this way, the piston is at a limit location, so that the volume of the brake cavity reaches the minimum, which helps implement functions such as brake fluid replacement and air exhaust.

In a possible implementation, the piston cylinder further includes an exhaust vent in communication with the brake cavity, and the exhaust vent is configured to exhaust air in the brake cavity. The brake further includes an exhaust member, and the exhaust member is configured to control opening and closing of the exhaust vent.

The exhaust member controls opening and closing of the exhaust vent, and air in the brake cavity can be exhausted, so that the brake cavity can be filled with brake fluid.

In a possible implementation, the exhaust member is an exhaust bolt, and the exhaust bolt is inserted into the exhaust vent and is threadedly connected to the piston cylinder.

In this way, costs of the exhaust member can be reduced on the premise of controlling opening and closing of the exhaust vent.

In a possible implementation, the exhaust member is an exhaust solenoid valve, the exhaust solenoid valve is connected to the exhaust vent and is configured to electrically connect to a controller, and the controller is configured to control on and off of the exhaust solenoid valve to control opening and closing of the exhaust vent.

In this way, there may be no need to manually control opening and closing of the exhaust vent, which helps implement automatic air exhaust.

In a possible implementation, the brake further includes a pressure sensor, and the pressure sensor is configured to output a pressure signal based on pressure of the brake fluid.

The pressure sensor detects the pressure of the brake fluid, which helps implement functions such as hydraulic oil replacement and air exhaust, and redundant stroke braking and fault detection.

In a possible implementation, the brake further includes a displacement sensor, the displacement sensor is fastened to the piston cylinder, and the displacement sensor is configured to output a displacement signal based on movement of the first transmission member in the first direction.

A movement distance of the first transmission member in the first direction may be detected by the displacement sensor, the relative spacing between the first transmission member and the piston in the first direction may be obtained based on the movement distance, and the gap between the brake disc and the friction plate may be obtained based on the relative spacing between the first transmission member and the piston. This helps precisely control the gap between the friction plate and the brake disc.

A second aspect of this application provides a braking system, including a drive unit and the brake according to any one of the implementations in the first aspect, where the drive unit is connected to the second transmission member of the brake.

In a possible implementation, the drive unit includes a motor, and a motor shaft of the motor is connected to the second transmission member of the brake. The motor includes an angle sensor, and the angle sensor is configured to output an angle signal based on a rotation angle and a rotation direction of the motor shaft of the motor.

A location of the piston may be obtained based on the angle signal and a movement distance of the first transmission member, so that a location of the friction plate may be obtained, and then a gap between the friction plate and the brake disc may be obtained. This helps improve precision of adjusting the gap between the friction plate and the brake disc. In addition, the location of the first transmission member may be further accurately detected.

In a possible implementation, the braking system further includes a brake fluid apparatus, the brake fluid apparatus communicates with the fluid inlet opening of the brake, and the brake fluid apparatus is configured to control the brake fluid to enter and exit the brake cavity of the brake. In this way, functions such as service braking, and hydraulic oil replacement and air exhaust can be implemented.

In a possible implementation, the brake fluid apparatus includes a brake fluid pipeline, a first solenoid valve, a second solenoid valve, and an oil can. a first interface of the brake fluid pipeline is configured to communicate with the fluid inlet opening of the brake, a second interface of the brake fluid pipeline communicates with the oil can via the first solenoid valve, and a third interface of the brake fluid pipeline communicates with a first interface of the second solenoid valve. A second interface of the second solenoid valve is configured to allow the brake fluid to enter and exit the brake fluid pipeline.

The brake cavity can communicate with the oil can by controlling on and off of the first solenoid valve, so that when the piston moves with a large stroke to enable a volume of the brake cavity to be increased, the brake cavity can be always filled with the brake fluid.

In a possible implementation, the braking system further includes the controller, and the controller is electrically connected to the drive unit and the brake separately, and is configured to electrically connect to the brake fluid apparatus.

In this way, the controller may control the brake, the brake fluid apparatus, and the drive unit based on signals such as the angle signal, the pressure signal, and the displacement signal, to implement functions such as service braking, parking braking, and gap adjustment.

A third aspect of this application provides a vehicle, including wheels and the braking system according to any one of the implementations in the second aspect. The braking system is configured to brake the wheels.

A fourth aspect of this application provides a control method, applied to a braking system. The braking system includes a brake fluid apparatus, a drive unit, and the brake according to the first aspect. The brake includes the friction plate, the piston, the first transmission member, and the second transmission member, the friction plate and the piston are disposed side by side in the first direction, one end of the piston is fastened to the friction plate, the other end of the piston is connected to the first transmission member, the first transmission member is in transmission connection to the second transmission member, and the second transmission member is connected to the drive unit; and
the control method includes:
obtaining a service braking signal, a preset relative spacing, and a current relative spacing between the first transmission member and the piston, where the service braking signal indicates that service braking needs to be performed on a vehicle;
controlling, based on the service braking signal, the brake fluid apparatus to output a hydraulic driving force acting on the piston, to implement service braking; and
controlling, based on the current relative spacing and the preset relative spacing, the drive unit to drive, via the second transmission member, the first transmission member to rotate until the current relative spacing changes to a first target relative spacing.

In a possible implementation, controlling, based on the current relative spacing and the preset relative spacing, the drive unit to drive, via the second transmission member, the first transmission member to rotate until the current relative spacing changes to the first target relative spacing includes:
when the current relative spacing is less than or equal to the preset relative spacing, controlling the drive unit to drive, via the second transmission member, the first transmission member to rotate until the current relative spacing changes to the first target relative spacing; or
when the current relative spacing is greater than the preset relative spacing, the piston is configured to: receive the hydraulic driving force, and drive the first transmission member to move in the first direction.

In a possible implementation, the brake fluid apparatus includes a brake fluid pipeline, a first solenoid valve, a second solenoid valve, and an oil can, a first interface of the brake fluid pipeline communicates with the fluid inlet opening of the brake, a second interface of the brake fluid pipeline communicates with the oil can via the first solenoid valve, a third interface of the brake fluid pipeline communicates with a first interface of the second solenoid valve, and a second interface of the second solenoid valve is configured to allow the brake fluid to enter or exit the brake fluid pipeline; and
the control method further includes:
obtaining a traveling exception signal and a determining signal, where the traveling exception signal indicates whether the friction plate is in abnormal contact with the brake disc in a traveling process of a vehicle, and the determining signal indicates whether a pedal mechanism of the vehicle outputs a braking signal;
controlling, based on the traveling exception signal and the determining signal, the first solenoid valve of the brake fluid apparatus to be turned on and the second solenoid valve to be turned off; and
controlling, based on the traveling exception signal and the determining signal, the drive unit to drive, via the second transmission member, the first transmission member to rotate until the current relative spacing changes to a second target relative spacing; and controlling the first solenoid valve of the brake fluid apparatus to be turned off and the second solenoid valve to be turned on.

In a possible implementation, the control method further includes:
obtaining a service braking release signal, where the service braking release signal is a signal indicating whether service braking performed by the braking system on the vehicle ends;
controlling, based on the service braking release signal, the first solenoid valve of the brake fluid apparatus to be turned off and the second solenoid valve to be turned on; and
controlling, based on the service braking release signal, the drive unit to drive, via the second transmission member, the first transmission member to rotate until the current relative spacing changes to a third target relative spacing.

In a possible implementation, the drive unit includes a motor having an angle sensor, the angle sensor outputs an angle signal when the motor works, the brake further includes the pressure sensor and the displacement sensor, the pressure sensor is configured to output the pressure signal based on the pressure of the brake fluid, and the displacement sensor is configured to output the displacement signal based on the movement of the first transmission member in the first direction; and
the control method further includes:
obtaining a fault indication signal and a control parameter, where the fault indication signal indicates whether the brake fluid apparatus is faulty, and the control parameter includes the pressure signal, the displacement signal, and the angle signal; and
controlling, based on the fault indication signal and the control parameter, the drive unit to drive, via the second transmission member, the first transmission member to rotate, to implement redundant service braking.

In a possible implementation, before obtaining the fault indication signal and the control parameter, the method further includes:
when a service braking failure signal is obtained, controlling a volume of the brake cavity of the brake to be reduced, and obtaining the current displacement signal, pressure signal, and angle signal, where the service braking failure signal indicates that a brake pedal of the vehicle sends a pressure building signal, but the pressure of the brake fluid in the braking system remains unchanged; and
generating the fault indication signal based on at least two of the current displacement signal, pressure signal, and angle signal.

In a possible implementation, the control method further includes:
obtaining a parking braking signal and a gap exception signal, where the parking braking signal indicates whether the vehicle is in a parking state, and the gap exception signal indicates that a gap between the friction plate and the brake disc is greater than an adjustment threshold;
controlling, based on the parking braking signal, the first solenoid valve of the brake fluid apparatus to be turned on and the second solenoid valve to be turned off; and
controlling, based on the parking braking signal and the gap exception signal, the drive unit to drive, via the second transmission member, the first transmission member to rotate until the current relative spacing changes to a fourth target relative spacing; and controlling the first solenoid valve of the brake fluid apparatus to be turned off.

In a possible implementation, the control method further includes:
when a hydraulic oil replacement and air exhaust signal is obtained, controlling the exhaust vent of the brake cavity to be opened; controlling the drive unit to drive, via the second transmission member, the first transmission member to rotate until the volume of the brake cavity reaches a minimum; and controlling the exhaust vent of the brake cavity to be closed;
when the volume of the brake cavity reaches the minimum, controlling the first solenoid valve of the brake fluid apparatus to be turned on; controlling the drive unit to drive, via the second transmission member, the first transmission member to rotate until the volume of the brake cavity reaches a maximum; and controlling the first solenoid valve to be turned off;
controlling the drive unit to drive, via the second transmission member, the first transmission member to rotate, and obtaining a current pressure value in the brake cavity; and
controlling, based on the current pressure value and a preset exhaust pressure value, the exhaust vent to be opened until the current pressure value is decreased to a target pressure value; and controlling the exhaust vent to be closed.

In a possible implementation, after the current pressure value is decreased to the target pressure value, the method further includes:
controlling the drive unit to drive, via the second transmission member, the first transmission member to rotate until a movement distance of the piston is a target distance; and controlling the exhaust vent to be closed.

In a possible implementation, the control method further includes:
obtaining a traveling signal, a preset gap value between the friction plate and the brake disc, and a current gap value between the friction plate and the brake disc, where the traveling signal indicates whether the vehicle is in a traveling state; and
controlling, based on the traveling signal, the current gap value, and the preset gap value, the drive unit to drive, via the second transmission member, the first transmission member to rotate, until the current gap value changes to a target gap value.

A fifth aspect of this application provides a computer-readable storage medium. The computer-readable storage medium stores computer-executable instructions, and when the computer-executable instructions are executed by a processor, the method according to any one of the implementations in the fourth aspect is implemented.

A sixth aspect of this application provides a computer program product, including a computer program. When the computer program is executed by a processor, the method according to any one of the implementations in the fourth aspect is implemented.

### BRIEF DESCRIPTION OF DRAWINGS

FIG. 1 is a diagram of a structure of a vehicle according to an embodiment of this application;
FIG. 2 is a diagram of a structure of a braking system in a related technology;
FIG. 3 is a sectional view of a braking system of a first type according to an embodiment of this application;
FIG. 4 is a diagram of a gap between a friction plate and a brake disc and a relative spacing between a piston and a first transmission member;
FIG. 5 is a sectional view of a structure of a transmission connection between a first transmission member and a second transmission member according to an embodiment of this application;
FIG. 6 is a sectional view of another structure of a transmission connection between a first transmission member and a second transmission member according to an embodiment of this application;
FIG. 7 is a partial enlarged view of a location A in FIG. 3;
FIG. 8 is a sectional view of a braking system of a second type according to an embodiment of this application;
FIG. 9 is a diagram in which a friction plate is worn out; and
FIG. 10 is a diagram in which a foreign object enters between a friction plate and a brake disc in a traveling process.

Description of reference numerals:
1: vehicle;
2: brake disc;
3: braking system;
   10: brake;
      11: friction plate;
      121: piston cylinder;
         1211: fluid inlet opening; 1212: transmission opening; 1213: exhaust vent;
         1214: first housing; 1215: second housing; 1216: accommodation housing;
      122: piston;
      123: first transmission member;
         124: first groove;
         125: first extension part;
         126: second extension part;
         127: lead screw part; 128: transmission tooth part;
      13: guiding mechanism;
         131: guiding block; 132: guiding groove;
      14: plane bearing;
      15: snap ring;
      16: axial limiting mechanism;
         161: axial elastic part; 162: axial fitting part;
      171: brake cavity; 172: secondary cavity;
      18: exhaust member;
         181: exhaust bolt; 182: exhaust solenoid valve;
      19: limiting structure;
         191: volume limiting part; 192: volume fitting part;
      21: second transmission member;
         211: third transmission member; 212: ball part; 213: second groove;
         214: bull gear; 215: pinion; 216: spline hole;
      22: drive unit;
      30: brake fluid apparatus;
         31: brake fluid pipeline; 32: first solenoid valve; 33: second solenoid valve; 34: oil can;
      40: controller; 50: displacement sensor; 60: pressure sensor; 70: check valve;
      81: first sealing ring; 82: second sealing ring;
   4: vehicle body; 5: wheels.

### DESCRIPTION OF EMBODIMENTS

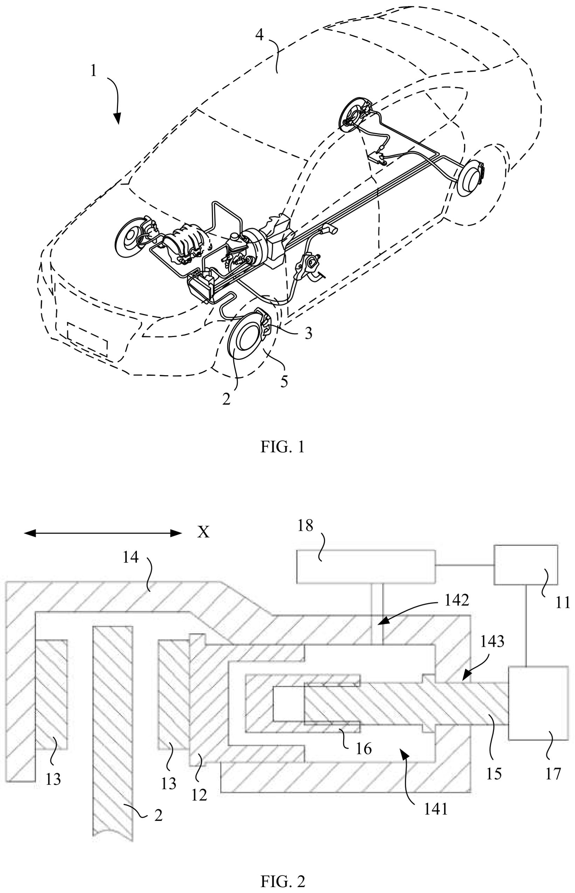

FIG. 1 is a diagram of a structure of a vehicle 1 according to an embodiment of this application. As shown in FIG. 1, the vehicle 1 provided in embodiments of this application may include a brake disc 2, wheels 5, a vehicle body 4, and a braking system 3. The brake disc 2 is fastened to the wheel 5. The braking system 3 is fastened to the vehicle body 4, and the braking system 3 is configured to securely clamp the brake disc 2 to implement service braking and parking braking. The vehicle body 4 is a main structure that is in the vehicle 1 and that is configured to connect components such as the wheels 5 and the braking system 3.

The vehicle 1 in embodiments of this application may be an electric vehicle (Electric Vehicle, EV), or may be a pure electric vehicle (Pure Electric Vehicle/Battery Electric Vehicle, PEV/BEV), a hybrid electric vehicle (Hybrid Electric Vehicle, HEV), a range extended electric vehicle (Range Extended Electric Vehicle, REEV), a plug-in hybrid electric vehicle (Plug-in Hybrid Electric Vehicle, PHEV), a new energy vehicle (New Energy Vehicle, NEV), or the like.

It may be understood that the braking system 3 mainly includes a parking braking module and a service braking module. The service braking module uses hydraulic fluid (brake fluid) to push, via a mechanical structure, friction plates 11 to securely clamp the brake disc 2 for movement, so that the friction plates 11 securely clamp the brake disc 2, to implement service braking. The parking braking module uses a motor to push, via a mechanical structure, the friction plate 11 to move, so that the friction plates 11 securely clamp the brake disc 2, to implement parking braking.

FIG. 2 is a diagram of a structure of a braking apparatus in a related technology. As shown in FIG. 2, the braking apparatus in the related technology includes a controller 11, a piston 12, two friction plates 13, a clamp body member 14, a lead screw 15, a nut 16, a motor 17, and a brake fluid apparatus 18. The clamp body member 14 has a piston cavity 141, a fluid inlet 142, and a connection port 143, where the piston cavity 141 separately communicates with the fluid inlet 142 and the connection port 143. The piston 12 may be movably mounted in the piston cavity 141. The lead screw 15 penetrates the connection port 143, and an end that is of the lead screw 15 and that is located outside the piston cavity 141 is in transmission connection to the motor 17. The nut 16 is sleeved on one end that is of the lead screw 15 and that is located on the piston cavity 141, and is in threaded fit with the lead screw 15. The two friction plates 13 are located on two opposite sides of the brake disc 2, one of the two friction plates 13 is fastened to the piston 12, and the other friction plate 13 is fastened to the clamp body member 14. The brake fluid apparatus 18 is connected to the fluid inlet 142. The controller 11 is electrically connected to both the motor 17 and the brake fluid apparatus 18. When service braking needs to be performed, the controller 11 controls the brake fluid apparatus 18 to deliver brake fluid to the piston cavity 141, the brake fluid pushes the piston 12 to move leftward in an axial direction (for example, an X direction in FIG. 2) of the brake disc 2, and the two friction plates 13 separately move toward the brake disc 2 at the same time, until the two friction plates 13 are tightly held onto the brake disc 2, to implement service braking. When parking braking needs to be performed, the controller 11 controls the motor 17 to work, the motor 17 drives the lead screw 15 to rotate, the lead screw 15 drives the nut 16 to move leftward in an axial direction of the lead screw 15, the nut 16 pushes the piston 12 to move leftward, and the two friction plates 13 separately move toward the brake disc 2 at the same time, until the two friction plates 13 are tightly held onto the brake disc 2, to implement parking braking.

In the foregoing solution, a large gap between the friction plate and the brake disc is large leads to a long distance that the friction plate needs to travel toward the brake disc in a parking braking process. Consequently, a parking braking stroke is long, resulting in long parking braking time. In addition, an increasing amount of wear of the brake disc and/or the friction plates leads to a larger gap between the friction plate and the brake disc. Consequently, an empty braking stroke is increased, resulting in an increase in braking time and an increase in a braking distance. In addition, an increase in the gap between the friction plate and the brake disc further causes a change in a brake foot sense. In addition, the friction plate and the brake disc can be completely separated only through driving of a friction force of the brake disc. In this case, there is a drag torque, which increases an amount of wear of the friction plate and/or the brake disc and generates an abnormal sound.

In view of this, embodiments of this application provide a control method, a brake, a braking system, a storage medium, and a product. In a process in which the braking system performs service braking, a gap between a friction plate and a brake disc may be adjusted, so that the gap between the friction plate and the brake disc becomes smaller after the service braking ends. Therefore, in a process in which the braking system performs parking braking, because the gap between the friction plate and the brake disc becomes smaller, a travel distance required by the friction plate becomes shorter, so that a parking braking stroke can be shortened. This can reduce parking braking time and improve parking efficiency.

With reference to the accompanying drawings, the following describes in detail structures of the brake and the braking system including the brake provided in embodiments of this application.

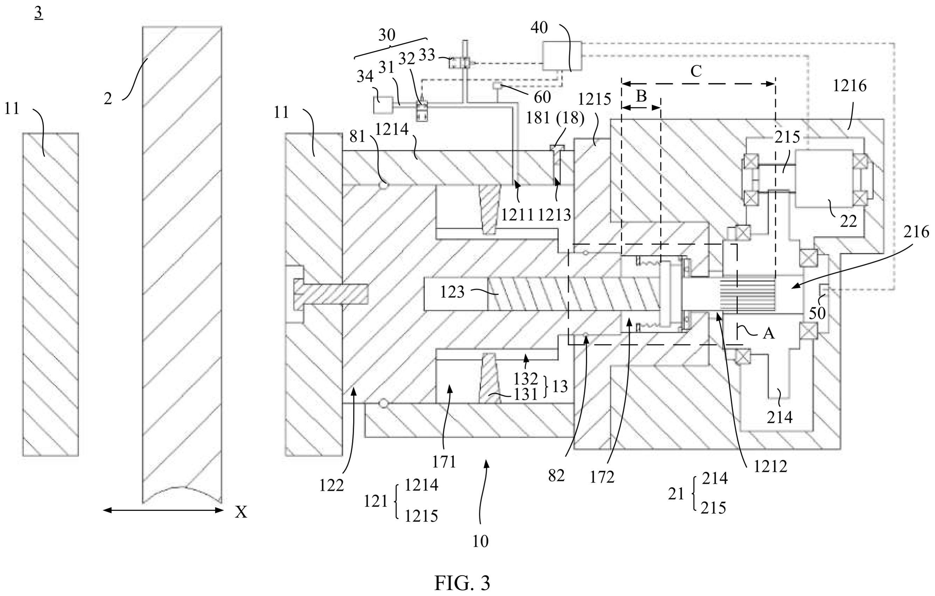

FIG. 3 is a sectional view of a braking system of a first type according to an embodiment of this application. As shown in FIG. 3, the braking system 3 provided in this embodiment of this application may include a brake fluid apparatus 30, a drive unit 22, and a brake 10. The brake fluid apparatus 30 is configured to output a hydraulic driving force transmitted to the brake 10, where the hydraulic driving force enables the brake 10 to securely clamp a brake disc 2 of a vehicle 1, to implement service braking. The drive unit 22 is configured to output the driving force transmitted to the brake 10, where the driving force may enable the brake 10 to securely clamp the brake disc 2 of the vehicle 1, to implement parking braking.

As shown in FIG. 3, the brake 10 may include a friction plate 11, a piston 122, a piston cylinder 121, a first transmission member 123, and a second transmission member 21. The friction plate 11 and the piston 122 are disposed side by side in a first direction, and the friction plate 11 is disposed outside the piston cylinder 121. The piston cylinder 121 is configured to connect to a vehicle body of the vehicle 1, to fasten the brake 10. The piston 122 is disposed inside the piston cylinder 121, one end of the piston 122 is connected to the first transmission member 123, and the other end of the piston 122 is fastened to the friction plate 11. The second transmission member 21 is in transmission connection to the first transmission member 123, the second transmission member 21 is configured to connect to the drive unit 22, and the drive unit 22 is configured to drive the second transmission member 21 to rotate around a rotation axis parallel to a first direction (for example, an X direction in FIG. 3). The first transmission member 123 is configured to convert a rotational motion of the second transmission member 21 into a linear motion of the piston 122 in the first direction. When the first transmission member 123 moves in the first direction, the first transmission member 123 is always in transmission connection to the second transmission member 21, and is always connected to the piston 122. It may be understood that the first direction is parallel to the first direction, and an axis of the piston 122 is parallel to the first direction.

When the first transmission member 123 is configured to convert the rotational motion of the second transmission member 21 into the linear motion of the piston 122 in the first direction, the first transmission member 123 may drive the piston 122 to move in the first direction, or the first transmission member 123 may move in the first direction relative to the piston 122. Furthermore, in addition to moving in the first direction relative to the piston 122, the first transmission member 123 may alternatively move in the first direction along with the piston 122.

A power source that drives the first transmission member 123 to move in the first direction is not limited herein. For example, when the drive unit 22 does not drive the second transmission member 21 to rotate, and the piston 122 receives the hydraulic driving force output by the brake fluid apparatus 30, the first transmission member 123 may move in the first direction along with the piston 122.

When the brake 10 performs parking braking, the drive unit 22 drives, via the second transmission member 21 and the first transmission member 123, the piston 122 to move toward the brake disc 2 in the first direction, so that the friction plates 11 can securely clamp the brake disc 2, to implement parking braking. When the brake 10 performs service braking, the piston 122 is configured to receive the hydraulic driving force output by the brake fluid apparatus 30, where the hydraulic driving force drives the piston 122 to move toward the brake disc 2 in the first direction. In this way, the piston 122 drives the friction plate 11 to move toward the brake disc 2 in the first direction, so that the friction plates 11 securely clamp the brake disc 2, to implement service braking.

In the service braking process, if the drive unit 22 does not output the driving force, the piston 122 may drive the first transmission member 123 to move in the first direction. In other words, a spacing between the other end of the piston 122 and the first transmission member 123 does not change. In addition, in the parking braking process, the piston 122 moves toward the brake disc 2 in the first direction, and a location of the first transmission member 123 relative to the brake disc 2 in the first direction almost remains unchanged, which may be considered as that the first transmission member 123 does not move axially in the first direction.

Therefore, in the service braking process, the first transmission member 123 may receive, via the second transmission member 21, the driving force output by the drive unit 22, where the driving force enables the first transmission member 123 to move away from the piston 122 in the first direction (in the service braking process, the hydraulic driving force keeps a location of the piston 122 unchanged), so that a relative spacing between the first transmission member 123 and the piston 122 is increased. In this way, after service braking ends, a gap between the friction plate 11 and the brake disc 2 can be reduced, so that a travel distance required by the friction plate 11 during parking braking can be shortened. This can shorten parking braking time and improve parking efficiency.

In this embodiment of this application, the relative spacing between the first transmission member 123 and the piston 122 may be a spacing between one end of the first transmission member 123 and the one end of the piston 122 in the first direction. For example, as shown in FIG. 3, the relative spacing between the first transmission member 123 and the piston 122 is a spacing (for example, B shown in FIG. 3) between a right end face of the piston 122 and the middle of the first transmission member 123, or the relative spacing between the first transmission member 123 and the piston 122 may be a spacing (for example, C shown in FIG. 3) between a right end face of the piston 122 and a right end face of the first transmission member 123.

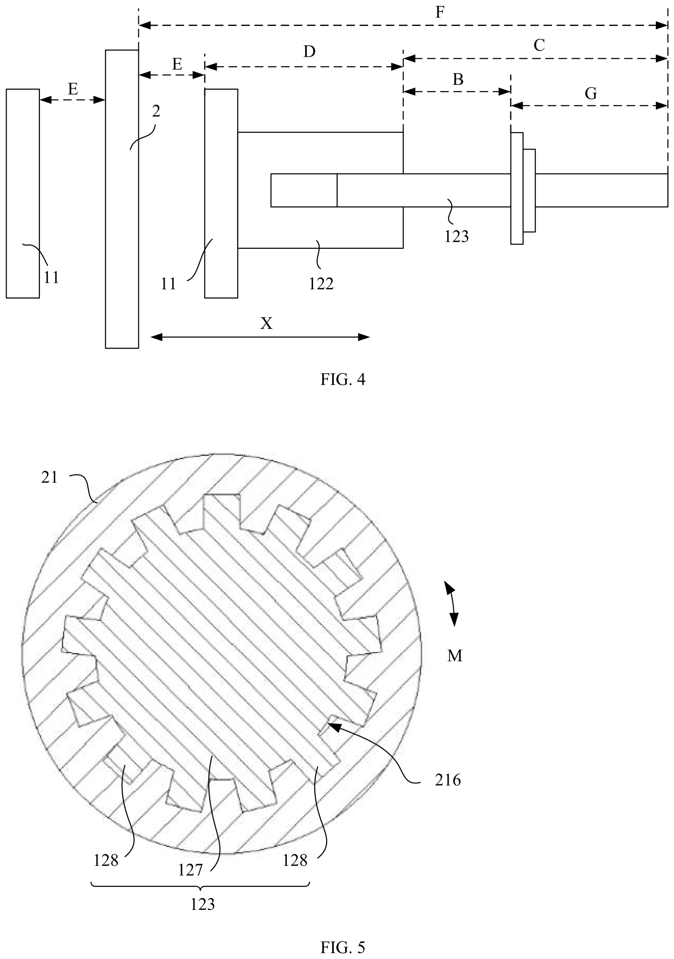

FIG. 4 is a diagram of a gap between the friction plate 11 and the brake disc 2 and a relative spacing between the piston 122 and the first transmission member 123. As shown in FIG. 4, the gap between the friction plate 11 and the brake disc 2 is E=F-D-C or E=F-G-B-D. In the parking braking process, the location of the first transmission member 123 relative to the brake disc 2 almost does not change, that is, F in FIG. 4 is a fixed value. In addition, because D and G are fixed values, a value of E depends on a value of B or C. In this case, the gap between the friction plate 11 and the brake disc 2 is negatively correlated with the relative spacing between the first transmission member 123 and the piston 122. A smaller relative spacing between the piston 122 and the first transmission member 123 indicates a larger gap between the friction plate 11 and the brake disc 2. A larger relative spacing between the piston 122 and the first transmission member 123 indicates closer proximity of the friction plate 11 to the brake disc 2, and a larger gap between the friction plate 11 and the brake disc 2. In this case, the gap between the friction plate 11 and the brake disc 2 may be adjusted by adjusting the relative spacing between the piston 122 and the first transmission member 123.

In the service braking process, the piston 122 receives the hydraulic driving force output by the brake fluid apparatus 30, and the hydraulic driving force keeps the location of the piston 122 unchanged, so that the drive unit 22 can drive, via the second transmission member 21, the first transmission member 123 to move rightward relative to the piston 122. In this way, the relative spacing (for example, B or C in FIG. 3) between the first transmission member 123 and the piston 122 is increased. It may be understood that, regardless of how the relative spacing between the first transmission member 123 and the piston 122 changes, the piston 122 is always connected to the first transmission member 123. Furthermore, in addition to driving the first transmission member 123 to move rightward relative to the piston 122, the drive unit 22 may further drive the first transmission member 123 to move leftward relative to the piston 122. In this way, the relative spacing between the first transmission member 123 and the piston 122 is reduced.

In the parking braking process, because the piston 122 does not receive the hydraulic driving force, the drive unit 22 may drive, via the second transmission member 21 and the first transmission member 123, the piston 122 to move toward the brake disc 2, so that the friction plates 11 can securely clamp the brake disc 2. In a process in which the piston 122 moves leftward, a location of the first transmission member 123 remains unchanged. In other words, a spacing between the first transmission member 123 and the brake disc 2 remains unchanged. In this way, it can be ensured that the first transmission member 123 can drive the piston 122 to move leftward, so that the friction plates 11 can securely clamp the brake disc 2.

Therefore, in this embodiment of this application, the relative spacing between the first transmission member 123 and the piston 122 is controlled to be increased in the traveling process, so that the travel distance required by the friction plate 11 (or the piston 122) during parking braking can be shortened. This can shorten parking braking time and improve parking efficiency. It may be understood that shortening the travel distance required by the friction plate 11 (the piston 122) during parking braking may also be understood as moving, in advance to the service braking process, a part of a stroke in which the piston 122 moving toward the brake disc 2 during parking braking, or may be understood as that service braking time and service braking time overlap.

In some possible implementations, as shown in FIG. 3, an end that is of the piston 122 and that faces away from the friction plate 11 includes a fitting hole, the first transmission member 123 includes a lead screw part 127, and an axis of the lead screw part 127 is parallel to the first direction. One end of the lead screw part 127 is disposed inside the fitting hole and is connected to the piston 122, and the other end of the lead screw part 127 is in transmission connection to the second transmission member 21. The lead screw part 127 may be used to convert the rotational motion into linear rotation, so that the lead screw part 127 may drive the piston 122 to move in the first direction, and the lead screw part 127 may move in the first direction relative to the piston 122. In this way, parking braking can be implemented, and the gap between the friction plate 11 and the brake disc 2 can be adjusted. This can avoid a problem of increased braking time due to a large spacing between the friction plate 11 and the brake disc 2 caused by cases such as replacement of the friction plate 11, replacement of the brake disc 2, and wear of one of the friction plate 11 and the brake disc 2.

As shown in FIG. 3, the fitting hole may be a blind hole, and an axis of the fitting hole is parallel to the axis of the lead screw part 127. However, in some embodiments, the fitting hole may alternatively penetrate the piston 122 in the first direction. This is not limited herein.

It may be understood that a form of fitting between the piston 122 and the lead screw part 127 is similar to a threaded connection. When the piston 122 does not receive the hydraulic driving force output by the brake fluid apparatus 30, and the lead screw part 127 receives the driving force output by the drive unit 22, the lead screw part 127 may drive the piston 122 to move in the first direction while rotating, so that the friction plate 11 is close to the brake disc 2. When the piston 122 receives the hydraulic driving force, and the lead screw part 127 receives the driving force, the lead screw part 127 may move in the first direction relative to the piston 122 while rotating. When the piston 122 receives the hydraulic driving force, and the lead screw part 127 does not receive the driving force, the piston 122 may drive the lead screw part 127 to move together while moving in the first direction. In this case, a relative spacing between the piston 122 and the lead screw part 127 does not change.

The following describes a connection manner between the piston 122 and the lead screw part 127, to ensure that the piston 122 can move in the first direction when the lead screw part 127 rotates.

In some possible implementations, as shown in FIG. 3, one end of the lead screw part 127 penetrates the fitting hole of the piston 122 and is threadedly connected to the piston 122, so that the piston 122 and the lead screw part 127 may be similar to a lead screw nut mechanism. Further, the piston 122 may drive the lead screw part 127 to move in the first direction, the lead screw part 127 may move in the first direction relative to the piston 122, and when the lead screw part 127 rotates, the piston 122 may be driven to move in the first direction, to implement functions such as service braking and parking braking.

It may be understood that the piston 122 is similar to a nut in function, so that the piston 122 and the lead screw part 127 may constitute a lead screw nut mechanism. In this way, when the piston 122 receives the hydraulic driving force, and the lead screw part 127 does not receive the driving force, the piston 122 may drive the lead screw part 127 to move in the first direction, so that the lead screw part 127 is always connected to the piston 122 while service braking is implemented. When the piston 122 receives the hydraulic driving force, and the lead screw part 127 receives the driving force, the lead screw part 127 may move in a direction opposite to a motion direction of the piston 122 while the piston 122 moves in the first direction, so that the relative spacing between the lead screw part 127 and the piston 122 is increased. This reduces a travel distance of the friction plate 11 during parking braking, to shorten parking time. When the piston 122 does not receive the hydraulic driving force and the lead screw part 127 receives the driving force, the lead screw part 127 may drive the piston 122 to move in the first direction, so that the friction plates 11 can securely clamp the brake disc 2, to implement parking braking.

In this embodiment of this application, a specific structure corresponding to the lead screw part 127 is not limited. For example, in some embodiments, the lead screw part 127 includes a screw rod section, a connection rod section, and a transmission rod section that are sequentially connected in the first direction. The screw rod section is disposed inside the fitting hole and is threadedly connected to the piston 122, and the transmission rod section is configured to be in transmission connection to the second transmission member 21.

Because the piston 122 is threadedly connected to the lead screw part 127, the piston 122 and the lead screw part 127 slide each other in a process in which the piston 122 and the lead screw part 127 move relative to each other. Consequently, the lead screw part 127 is prone to wear, and positioning accuracy of the lead screw part 127 and the piston 122 is reduced. Therefore, in some possible implementations, one end of the lead screw part 127 penetrates the fitting hole of the piston 122, and the one end of the lead screw part 127 is configured to define a ball screw mechanism together with the piston 122. This can reduce a friction force between the piston 122 and the lead screw part 127, and help improve movement precision of the piston 122 and/or the lead screw part 127.

A specific structure of the piston 122 is not limited herein. It may be understood that the piston 122 may include a nut and a steel ball. The nut is sleeved on the lead screw part 127, and is in spiral transmission fit with the lead screw part 127 via the steel ball. Rolling friction between the nut and the lead screw part 127 can be implemented by using the steel ball, so that a problem that the lead screw part 127 is prone to wear and has low positioning accuracy can be resolved.

It may be understood that both the lead screw nut mechanism and the ball screw mechanism are spiral transmission mechanisms, and can convert the rotational motion of the lead screw part 127 into the linear motion of the piston 122, so that the piston 122 drives the friction plate 11 to move in the first direction.

In this embodiment of this application, a motion form of the first transmission member 123 includes two forms. In a first form, the first transmission member 123 moves in the first direction under driving of the piston 122 or the second transmission member 21. In a second form, the first transmission member 123 rotates under action of the second transmission member 21. Therefore, when the drive unit 22 has no output driving force, a connection manner between the first transmission member 123 and the second transmission member 21 needs to ensure that the first transmission member 123 can translate along with the piston 122. When the drive unit 22 outputs the driving force, a connection manner between the first transmission member 123 and the second transmission member 21 needs to ensure that the first transmission member 123 can rotate. The following describes how the second transmission member 21 is in transmission connection to the first transmission member 123.

FIG. 5 is a sectional view of a structure of a transmission connection between the first transmission member 123 and the second transmission member 21 according to an embodiment of this application. In some possible implementations, the second transmission member 21 may include a spline hole 216 that penetrates the second transmission member 21, and an axis of the spline hole 216 is parallel to the first direction. An end that is of the first transmission member 123 and that is close to the second transmission member 21 is disposed inside the spline hole 216 and is in spine connection to the second transmission member 21. In this way, the first transmission member 123 may slide in the first direction inside the second transmission member 21, so that the first transmission member 123 may move together with the piston 122, or the first transmission member 123 may slide axially inside the second transmission member 21 relative to the piston 122. In addition, in a circumferential direction of the first transmission member 123, the first transmission member 123 and the second transmission member 21 fit each other, so that the second transmission member 21 can drive the first transmission member 123 to rotate, to ensure that the first transmission member 123 can rotate automatically and can move axially relative to the piston 122.

It may be understood that, as shown in FIG. 5, a structure of the second transmission member 21 may be an annular structure. In this case, the second transmission member 21 may be sleeved on an outer wall of the other end of the lead screw part 127 and in spline connection to the first transmission member 123, so that the second transmission member 21 may abut against the first transmission member 123 in the circumferential direction of the lead screw part 127, and further, the second transmission member 21 may drive the first transmission member 123 to rotate.

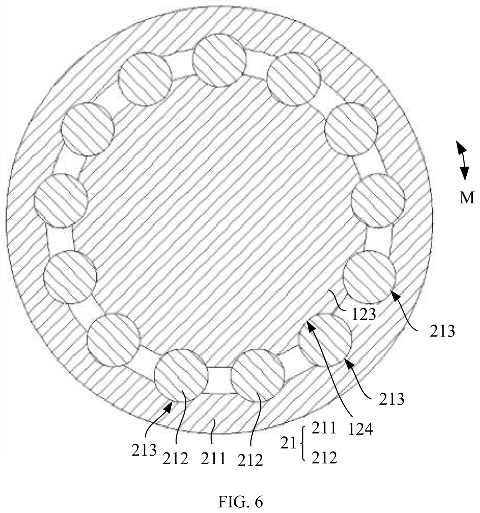

A specific structure of the spline connection between the first transmission member 123 and the second transmission member 21 is not limited herein. For example, in some embodiments, one end of the first transmission member 123 may include a lead screw part 127 and a plurality of transmission tooth parts 128, an extension direction of each transmission tooth part 128 is parallel to an axial direction of the lead screw part 127, and the plurality of transmission tooth parts 128 are spaced apart in a circumferential direction of the lead screw part 127 and are fastened to an outer wall of the lead screw part 127. A longitudinal section of each transmission tooth part 128 may include but is not limited to a rectangle (as shown in FIG. 6), a triangle, a semicircle, or the like. The longitudinal section of each transmission tooth part 128 is perpendicular to the axial direction of the lead screw part 127.

FIG. 6 is a sectional view of another structure of a transmission connection between the first transmission member 123 and the second transmission member 21 according to an embodiment of this application. In some possible implementations, as shown in FIG. 6, an outer wall of an end that is of the first transmission member 123 and that is close to the second transmission member 21 may include a plurality of first grooves 124, each first groove 124 extends in an axial direction of the first transmission member 123, and the plurality of first grooves 124 are spaced apart in the circumferential direction (for example, an M direction shown in FIG. 6) of the first transmission member 123. The second transmission member 21 may include a plurality of ball members 212 and a third transmission member 211. The third transmission member 211 is sleeved on an outer wall of the first transmission member 123 and is configured to connect to the drive unit 22. An inner surface that is of the third transmission member 211 and that faces the first transmission member 123 includes a plurality of second grooves 213, each second groove 213 extends in an axial direction of the second transmission member 21, and the plurality of second grooves 213 are spaced apart in a circumferential direction (for example, the M direction shown in FIG. 6) of the second transmission member 21. The plurality of second grooves 213 are respectively in a one-to-one correspondence with the plurality of first grooves 124 and the plurality of ball members 212, and two opposite ends of each ball member 212 are respectively disposed inside the corresponding first groove 124 and inside the corresponding second groove 213.

The first transmission member 123 may slide in the first direction inside the second transmission member 21, so that the first transmission member 123 may move together with the piston 122, or the first transmission member 123 may slide axially inside the second transmission member 21 relative to the piston 122. In addition, in a circumferential direction of the first transmission member 123, the first transmission member 123 and the second transmission member 21 fit each other, so that the second transmission member 21 can drive the first transmission member 123 to rotate, to ensure that the first transmission member 123 can rotate automatically and can move axially relative to the piston 122. In addition, the second transmission member 21 of such a structure is used, so that a friction force between the first transmission member 123 and the second transmission member 21 can be reduced, and further, resistance of sliding of the first transmission member 123 in the second transmission member 21 is reduced.

It may be understood that, as shown in FIG. 3, the first groove 124 may be disposed on an outer wall of the lead screw part 127 of the first transmission member 123, and an extension direction of the first groove 124 is parallel to the axial direction of the lead screw part 127.

It may be understood that both the first groove 124 and the second groove 213 may be arc-shaped grooves, and longitudinal sections of both the first groove 124 and the second groove 213 may be arc-shaped sections. The longitudinal sections of the first groove 124 and the second groove 213 are perpendicular to the axial direction of the first transmission member 123.

It may be understood that each ball member 212 may include at least one ball, and two opposite ends of each ball are respectively inserted into the first groove 124 and the second groove 213 that correspond to the ball member 212. In addition, a quantity of balls of each ball member 212 may be the same or different. This is not limited herein.

A specific structure of the third transmission member 211 is not limited herein. The specific structure of the third transmission member 211 may be determined based on a connection manner between the second transmission member 21 and the drive unit 22. For example, in some embodiments, the second transmission member 21 may include a driving gear and a driven gear member. The drive unit 22 may include a motor, and the driving gear is sleeved on an output shaft of the motor and is fastened to a motor shaft. The driven gear member may include the third transmission member 211 and the plurality of ball members 212. The third transmission member 211 may be a gear sleeved on the outer wall of the first transmission member 123 and may fit the first transmission member 123 via the ball members 212, and the third transmission member 211 is engaged with the driving gear. Therefore, the third transmission member 211 may be similar to a gear.

In the foregoing content, the two structures of the transmission connection between the second transmission member 21 and the first transmission member 123 are described. However, the two structures of the transmission connection do not constitute a limitation on the structure of the second transmission member 21, provided that a function of the second transmission member 21 is to implement a transmission connection between the first transmission member 123 and the drive unit 22. Therefore, specific structure of the second transmission member 21 is not limited in embodiments of this application.

In some embodiments, the second transmission member 21 may be functionally similar to a reducer. A specific deceleration ratio and deceleration form of the reducer are not limited herein. For example, the second transmission member 21 may be a multi-stage fixed-axis reducer, a planetary gear reducer, a harmonic drive gear reducer, or the like. For example, as shown in FIG. 3, the second transmission member 21 may include a bull gear 214 and a pinion 215 that are engaged with each other, to reduce a speed and increase a torque. The pinion 215 is sleeved on the motor shaft of the motor. The bull gear 214 is sleeved on the outer wall of the lead screw part 127 of the first transmission member 123 and is in transmission connection to the lead screw part 127 of the first transmission member 123. The first transmission member 123 may slide in the bull gear 214, so that the first transmission member 123 may move in the first direction relative to the bull gear 214. In addition, the bull gear 214 may also abut against the first transmission member 123 in a circumferential direction, so that the bull gear 214 can drive the first transmission member 123 to rotate. For example, the bull gear 214 may be in transmission connection to the first transmission member 123 through a spline connection. Alternatively, the bull gear 214 may include the ball member 212 and the third transmission member 211.

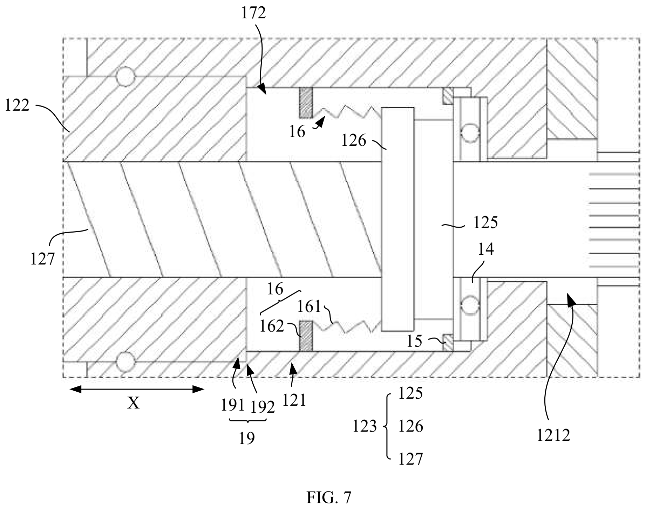

FIG. 7 is a partial enlarged view of a location A in FIG. 7. In some possible implementations, as shown in FIG. 7, the brake 10 may further include a plane bearing 14. The plane bearing 14 is disposed inside the piston cylinder 121 and is fastened to the piston cylinder 121, and the plane bearing 14 is sleeved on the outer wall of the first transmission member 123 and is movably connected to the first transmission member 123. The first transmission member 123 includes a first extension part 125 extending in a radial direction of the first transmission member 123, the first extension part 125 is disposed between the plane bearing 14 and the piston 122 in an axial direction of the first transmission member 123, and the first extension part 125 is configured to abut against an end face of an end that is of the plane bearing 14 and that faces the piston 122. Therefore, it can be ensured, by using the plane bearing 14, that the first transmission member 123 smoothly rotates relative to the piston cylinder 121. In addition, in a process in which the first transmission member 123 drives the piston 122 to move in the first direction, the piston cylinder 121 axially supports the first transmission member 123 in the first direction via the plane bearing 14, so that the first transmission member 123 can bear sufficient axial load. In this way, the piston 122 can move toward the brake disc 2.

It may be understood that the first transmission member 123 can abut against the piston cylinder 121 in the axial direction via the plane bearing 14, so that a relative location between the first transmission member 123 and the piston cylinder 121 remains unchanged. The piston cylinder 121 is used as a stand base, and the first transmission member 123 may smoothly rotate to drive the piston 122 to move, to implement parking braking.

A specific structure of the first extension part 125 is not limited herein. For example, as shown in FIG. 7, the first extension part 125 may be of a hollow structure in a form of an annular body, and the annular body is configured to abut against an end face of an end that is of the plane bearing 14 and that faces the brake disc 2 in the first direction. Alternatively, in some embodiments, the first extension part 125 may include two extension blocks, the two extension blocks are spaced apart in a circumferential direction of the first transmission member 123, and each extension block is configured to be in contact with the plane bearing 14.

A specific structure of the first transmission member 123 having the first extension part 125 is not limited herein. For example, in some embodiments, the first transmission member 123 may include a first extension part 125 and a lead screw part 127. An axial direction of the lead screw part 127 is parallel to the first direction, and two opposite ends of the lead screw part 127 are respectively in transmission connection to the piston 122 and the second transmission member 21. The first extension part 125 is disposed on an outer wall of the lead screw part 127 and is fastened to the lead screw part 127. In addition, the lead screw part 127 and the first extension part 125 may be of an integrated structure or a split structure. This is not limited herein.

A manner of fastening the plane bearing 14 to the piston cylinder 121 is not limited herein. For example, in some embodiments, the brake 10 may further include a snap ring 15, and the plane bearing 14 is fastened to the piston cylinder 121 via the snap ring 15. In a process in which the first transmission member 123 moves in the first direction, because the first extension part 125 may be separated from the plane bearing 14, the snap ring 15 may constrain the plane bearing 14 in the first direction, to avoid a change in a location of the plane bearing 14 relative to the piston cylinder 121.

In some possible implementations, as shown in FIG. 7, the brake 10 may further include an axial limiting mechanism 16, and the axial limiting mechanism 16 is disposed inside the piston cylinder 121. When the first transmission member 123 moves in the first direction, the axial limiting mechanism 16 is configured to prevent the first transmission member 123 from fluttering in the first direction.

A specific structure of the axial limiting mechanism 16 is not specifically limited herein. For example, in some possible implementations, the axial limiting mechanism 16 may include an axial fitting part 162 and an axial elastic part 161. The axial fitting part 162 is fastened to an inner wall of the piston cylinder 121, an axis of the axial elastic part 161 is parallel to an axis of the first transmission member 123, and two opposite ends of the axial elastic part 161 are respectively connected to the axial fitting part 162 and the outer wall of the first transmission member 123. Therefore, the first transmission member 123 can be prevented from fluttering in the first direction by using an elastic force of the axial elastic part 161.

In this embodiment of this application, a structure of the axial fitting part 162 is not limited. For example, in some embodiments, the axial fitting part 162 may be an axial fitting block extending in a second direction perpendicular to the first direction, and two ends of the axial fitting block are respectively connected to the inner wall of the piston cylinder 121 and one end of the axial elastic part 161.

In this embodiment of this application, a structure of the axial elastic part 161 is not limited. For example, in some embodiments, the axial elastic part 161 may be a spring, two ends of the spring are respectively connected to the axial fitting part 162 and the outer wall of the first transmission member 123, and an axial direction of the spring is parallel to the axial direction of the first transmission member 123. Alternatively, in some embodiments, the axial elastic part 161 may be an elastic block with elasticity, two ends of the elastic block are respectively connected to the axial fitting part 162 and the outer wall of the first transmission member 123, and an extension direction of the elastic block is parallel to the axial direction of the first transmission member 123.

In this embodiment of this application, there may be at least one axial elastic part 161 and at least one axial fitting part 162, and the at least one axial elastic part 161 is in a one-to-one correspondence with the at least one axial fitting part 162. When there may be a plurality of axial fitting parts 162 and a plurality of axial elastic parts 161, the plurality of axial fitting parts 162 are in a one-to-one correspondence with the plurality of axial elastic parts 161, the plurality of axial fitting parts 162 are spaced apart in the circumferential direction of the first transmission member 123, and the plurality of axial elastic parts 161 are spaced apart in the circumferential direction of the first transmission member 123.

In some embodiments, as shown in FIG. 7, the first transmission member 123 may include a second extension part 126 extending in a radial direction of the first transmission member 123, the second extension part 126 is disposed between the piston 122 and the first extension part 125 of the first transmission member 123 in the first direction, the axial fitting part 162 is located between the piston 122 and the second extension part 126, and the two opposite ends of the axial elastic part 161 are respectively connected to the second extension part 126 and the axial fitting part 162. When there are a plurality of axial elastic parts 161, two opposite ends of each axial elastic part 161 are respectively connected to the second extension part 126 and a corresponding axial fitting part 162.

A structure of the second extension part 126 is not limited herein. For example, in some embodiments, the second extension part 126 may be a hollow annular part, and an axial direction of the annular part is parallel to the first direction. Alternatively, in some embodiments, the second extension part 126 may include a plurality of second extension blocks that are spaced apart in the circumferential direction of the first transmission member 123, and an extension direction of each second extension block is perpendicular to the first direction.

As shown in FIG. 7, there is no gap between the second extension part 126 and the first extension part 125 in the first direction, in other words, the second extension part 126 is connected to the first extension part 125. However, in some embodiments, there is a gap between the second extension part 126 and the first extension part 125 in the first direction. In addition, a size of the second extension part 126 may be determined based on a location of the axial elastic part 161. This is not limited herein.

A specific structure of the first transmission member 123 having the first extension part 125 and the second extension part 126 is not limited herein. For example, in some embodiments, the first transmission member 123 may include a first extension part 125, a second extension part 126, and a lead screw part 127. An axial direction of the lead screw part 127 is parallel to the first direction, and two opposite ends of the lead screw part 127 are respectively in transmission connection to the piston 122 and the second transmission member 21. The first extension part 125 and the second extension part 126 are separately disposed on an outer wall of the lead screw part 127 and are fastened to the lead screw part 127. In addition, the lead screw part 127, the first extension part 125, and the second extension part 126 may be of an integrated structure or a split structure. This is not limited herein.

It should be noted that, in addition to a connection to the axial elastic part 161 via the second extension part 126, in some possible implementations, the first extension part 125 may be used to replace the second extension part 126. In this case, the axial fitting part 162 is located between the first extension part 125 and the piston 122 in the first direction, and two ends of the axial elastic part 161 are respectively connected to the first extension part 125 and the axial fitting part 162.

In this embodiment of this application, to ensure that the piston 122 is driven, through rotation of the first transmission member 123, to translate in the first direction, the piston 122 needs to be prevented from rotating along a rotation axis parallel to the first direction, that is, the piston 122 translates in the first direction. Therefore, in some possible implementations, as shown in FIG. 3, the brake 10 may further include a guiding mechanism 13. A part of the guiding mechanism 13 is disposed on the piston cylinder 121, the other part of the guiding mechanism 13 is disposed on the first transmission member 123, and the guiding mechanism 13 is configured to enable the piston 122 to translate in the first direction. Therefore, in a parking braking process, the first transmission member 123 may drive the piston 122 to translate in the first direction, functions such as service braking, adjustment of a spacing between the friction plate 11 and the brake disc, quick reset of the friction plate 11, zero roll resistance traveling, and discharge of a traveling foreign object are implemented.

In some embodiments, the guiding mechanism 13 may be disposed inside the piston cylinder 121, the part of the guiding mechanism 13 is disposed on an inner wall of the piston cylinder 121, and the other part of the guiding mechanism 13 is disposed on an outer wall of the first transmission member 123. The guiding mechanism 13 is disposed inside the piston cylinder 121, to help improve structural compactness of the brake 10, and further reduce a volume of the brake 10.

A specific structure of the guiding mechanism 13 is not limited herein. For example, in some possible implementations, as shown in FIG. 3, the guiding mechanism 13 may include two guiding groups, and the two guiding groups are spaced apart in the circumferential direction of the first transmission member 123. Each guiding group may include one guiding block 131 and one guiding groove 132. One of the guiding block 131 and the guiding groove 132 in each guiding group is disposed on the inner wall of the piston cylinder 121, and the other of the guiding block 131 and the guiding groove 132 is disposed on an outer wall of the piston 122. The guiding block 131 is slidably disposed inside the guiding groove 132, and the piston 122 does not rotate around the axis of the first transmission member 123. In this way, when the first transmission member 123 rotates, the piston 122 can be driven to translate in the first direction.

It may be understood that, in addition to two guiding groups, there may be one, three, four, or five guiding groups.

A specific shape of the guiding block 131 is not limited herein. For example, in some embodiments, a longitudinal section of the guiding block 131 may be an isosceles trapezoid.

It may be understood that a shape of the guiding groove 132 may adapt to a part that is of the guiding block 131 and that is inserted into the guiding groove 132. This is not specifically limited herein.

As shown in FIG. 3, the guiding block 131 is fastened to the inner wall of the piston cylinder 121, and the guiding groove 132 is disposed on the outer wall of the piston 122. However, in some embodiments, the guiding block 131 may alternatively be fastened to the outer wall of the piston 122, and the guiding groove 132 is disposed on the inner wall of the piston cylinder 121.

In some possible implementations, the piston cylinder 121 may be of a hollow structure, and an axis of the piston cylinder 121 is parallel to an axis of the friction plate 11. The outer wall of the piston 122 and the inner wall of the piston cylinder 121 jointly define a brake cavity 171 with a variable volume. The piston cylinder 121 includes a fluid inlet opening 1211 in communication with the brake cavity 171, and the fluid inlet opening 1211 is configured for brake fluid to enter and exit the brake cavity 171. The friction plate 11 and the second transmission member 21 are disposed outside the piston cylinder 121, a part of the first transmission member 123 is disposed inside the piston cylinder 121, and the other part of the first transmission member 123 is disposed outside the piston cylinder 121 and is in transmission connection to the second transmission member 21. The brake cavity 171 with the variable volume may be defined by using the piston cylinder 121 of such a structure, so that service braking can be implemented by controlling a volume of the brake fluid.

It may be understood that the piston cylinder 121 includes two opposite openings in the first direction, the friction plate 11 is disposed at one of the openings of the piston cylinder 121 and is connected to the piston 122 via the opening, and the first transmission member 123 is in transmission connection to the second transmission member 21 through the other opening of the piston cylinder 121.

It may be understood that the first transmission member 123 is suspended in the piston cylinder 121 and is movably connected to the inner wall of the piston cylinder 121, to ensure that the first transmission member 123 can rotate or move in the first direction.

It may be understood that, as shown in FIG. 3, when the piston 122 moves leftward until the friction plates 11 securely clamp the brake disc 2, the volume of the brake cavity 171 may reach a maximum. When the piston 122 moves rightward to a limit location, the volume of the brake cavity 171 may reach a minimum.

As shown in FIG. 3, the brake cavity 171 may be an annular cavity surrounding the axis of the piston 122, to help balance a force applied to the piston 122. Certainly, the brake cavity 171 is not limited to the annular cavity.

As shown in FIG. 3, to define the brake cavity 171 and ensure that the brake fluid can drive the piston 122 to move, a shape of the piston 122 may be a stepped shaft. For example, in some embodiments, the piston 122 may include a first shaft segment and a second shaft segment that are coaxial. An outer diameter of the first shaft segment is greater than an outer diameter of the second shaft segment, and an end that is of the first shaft segment and that faces the brake disc 2 is fastened to the friction plate 11. An end that is of the second shaft segment and that faces away from the first shaft segment is in transmission connection to one end of the first transmission member 123.

A specific structure of the piston cylinder 121 is not limited herein. For example, in some embodiments, the piston cylinder 121 may include a first housing 1214 and a second housing 1215 that each are of a hollow structure. The first housing 1214 and the second housing 1215 are coaxially disposed, and a first end of the first housing 1214 is fastened to a first end of the second housing 1215. The first housing 1214 is located between the friction plate 11 and the second housing 1215, and the first housing 1214 and the second housing 1215 are separately sleeved on the piston 122 and are respectively connected to two opposite ends of the piston 122 in a sealed manner.

As shown in FIG. 3, the inner wall of the piston cylinder 121 and an end that is of the piston 122 and that faces away from the friction plate 11 jointly define a secondary cavity 172 having an opening. In other words, the piston 122 and the inner wall of the piston cylinder 121 of the hollow structure jointly define the brake cavity 171 and the secondary cavity 172 that are separated from each other. The secondary cavity 172 may be configured to accommodate the axial limiting mechanism 16, the plane bearing 14, the snap ring 15, and the like in the foregoing content, so that compactness of the brake 10 can be improved.

In some possible implementations, as shown in FIG. 3, the brake 10 may further include a first sealing ring 81 and a second sealing ring 82, where the first sealing ring 81 and the second sealing ring 82 are respectively sleeved on the two opposite ends of the piston 122 and abut against the inner wall of the piston cylinder 121. In use of the first sealing ring 81 and the second sealing ring 82, sealing performance of the brake cavity 171 can be ensured on a premise that the piston 122 can move relative to the piston cylinder 121, to avoid leakage of the brake fluid in the brake cavity 171.

In some possible implementations, as shown in FIG. 7, a limiting structure 19 may be provided between the piston 122 and the piston cylinder 121. The limiting structure 19 is configured to determine a relative location between the piston 122 and the piston cylinder 121 when the piston 122 moves in the first direction, so that the volume of the brake cavity 171 reaches the minimum. This helps implement functions such as brake fluid replacement and air exhaust.

In this embodiment of this application, a specific structure of the limiting structure 19 is not limited. For example, in some embodiments, the limiting structure 19 may include a volume limiting part 191 and a volume fitting part 192 that fits the volume limiting part 191. The volume limiting part 191 is disposed on an outer wall of the piston 122, and the volume fitting part 192 is disposed on an inner wall of the piston cylinder 121. The volume fitting part 192 fits the volume limiting part 191, so that when the piston 122 moves away from the brake disc 2, the relative location between the piston 122 and the piston cylinder 121 can be determined. In this way, the piston 122 is at a limit location, so that the volume of the brake cavity 171 reaches the minimum, which helps implement functions such as brake fluid replacement and air exhaust.

A specific structure of the volume limiting part 191 is not limited herein. A structure of the volume limiting part 191 may be determined based on a structure of the volume fitting part 192. For example, in some embodiments, the volume fitting part 192 is a step disposed on the inner wall of the piston cylinder 121, and the volume limiting part 191 may be an end that is of the piston 122 and that faces away from the friction plate 11. When an end face of the end that is of the piston 122 and that faces away from the friction plate 11 is in contact with the step, the piston 122 cannot continue to move rightward, the relative location between the piston 122 and the piston cylinder 121 remain unchanged, and the volume of the brake cavity 171 reaches a minimum.

In some possible implementations, as shown in FIG. 3, the piston cylinder 121 further includes an exhaust vent 1213 in communication with the brake cavity 171, and the exhaust vent 1213 is configured to exhaust air in the brake cavity 171, to ensure that pressure in the brake cavity 171 is stable within a proper range. The brake 10 further includes an exhaust member 18. The exhaust member 18 is configured to control opening and closing of the exhaust vent 1213, to ensure sealing performance of the brake cavity 171 when air does not need to be exhausted.

In some embodiments, the exhaust member 18 may be an exhaust bolt 181, and the exhaust bolt 181 is inserted into the exhaust vent 1213 and is threadedly connected to the piston cylinder 121 to seal the exhaust vent 1213. The exhaust bolt 181 is used for sealing the exhaust vent 1213, so that costs of the exhaust member 18 can be reduced while opening and closing of the exhaust vent 1213 are controlled. This reduces costs of the brake 10.

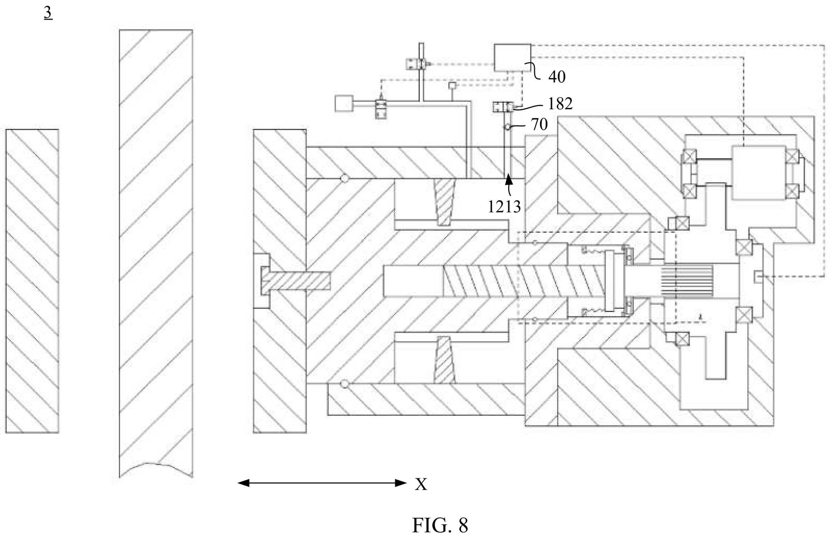

When the exhaust bolt 181 is used as the exhaust member 18, the exhaust vent 1213 needs to be manually opened, which is inconvenient to operate. FIG. 8 is a sectional view of a braking system 3 of a second type according to an embodiment of this application. Therefore, in some embodiments, the exhaust bolt 181 may be replaced with an exhaust solenoid valve 182 (as shown in FIG. 8), and the exhaust solenoid valve 182 is connected to the exhaust vent 1213 and is configured to electrically connect to a controller 40. The controller 40 is configured to control on and off of the exhaust solenoid valve 182 to control opening and closing of the exhaust vent 1213, to implement automatic air exhaust without a manual operation.

In some embodiments, as shown in FIG. 8, the brake 10 may further include a check valve 70. The exhaust solenoid valve 182 is connected to the exhaust vent 1213 via the check valve 70. The check valve 70 is configured to enable the brake fluid in the brake cavity 171 to flow out unidirectionally from the exhaust vent 1213.

In some possible implementations, as shown in FIG. 3, the brake 10 may further include a pressure sensor 60. The pressure sensor 60 is configured to output a pressure signal based on pressure of the brake fluid. Functions such as hydraulic oil replacement and air exhaust, redundant stroke braking, and fault detection can be implemented based on the pressure signal.

A specific arrangement location of the pressure sensor 60 is not limited herein. For example, in some embodiments, the pressure sensor 60 may be disposed on a pipeline connecting the brake fluid apparatus 30 and the fluid inlet opening 1211. Alternatively, the pressure sensor 60 may be disposed inside the brake cavity 171.

In some possible implementations, as shown in FIG. 3, the brake 10 may further include a displacement sensor 50. The displacement sensor 50 may be fastened to the piston cylinder 121. The displacement sensor 50 is configured to output a displacement signal based on movement of the first transmission member 123 in the first direction. Functions such as follow-up braking, pre-parking, and adjustment of a gap between the friction plate 11 and the brake disc 2 may be implemented based on the displacement signal.

A movement distance of the first transmission member 123 in the first direction may be detected by the displacement sensor 50, a relative spacing between the first transmission member 123 and the piston 122 in the first direction may be obtained based on the movement distance, and the gap between the brake disc 2 and the friction plate 11 may be obtained based on the relative spacing between the first transmission member 123 and the piston 122. This helps precisely control the gap between the friction plate 11 and the brake disc 2.

In this embodiment of this application, a specific arrangement location of the displacement sensor 50 is not limited herein. In some embodiments, because a location of the brake disc 2 remains unchanged, and the piston cylinder 121 is fastened to the vehicle body, a location of the piston cylinder 121 remains unchanged. In this way, the movement distance of the first transmission member 123 may be obtained by measuring a change of the spacing between the first transmission member 123 and one end of the piston cylinder 121 in the first direction, so that a location of the first transmission member 123 may be obtained. For example, as shown in FIG. 3, the displacement sensor 50 may be disposed inside the piston cylinder 121 and located in an arrangement area of the inner wall of the piston cylinder 121. In the first direction, the arrangement area is opposite to an end face of an end that is of the piston 122 and that faces away from the friction plate 11. The displacement sensor 50 detects a change of a spacing that is in the first direction and that is between the arrangement area and the end face of the end that is of the piston 122 and that faces away from the friction plate 11, and may obtain the relative spacing between the piston 122 and the first transmission member 123 through calculation, to obtain the movement distance of the first transmission member 123 in the first direction.

In some possible implementations, as shown in FIG. 3, there may be two friction plates 11, the two friction plates 11 are disposed on two opposite sides of the brake disc 2, one of the two friction plates 11 is fastened to the piston 122, and the two friction plates 11 are connected. When the piston 122 drives one friction plate 11 to move in the first direction, the friction plate 11 also drives the other friction plate 11 to move in the first direction, so that the two friction plates 11 can separately move in the first direction. Further, the two friction plates 11 can securely clamp the brake disc 2.

However, in addition to two friction plates 11, in some embodiments, there may alternatively be one friction plate 11. This is not limited herein.

A connection manner between the piston 122 and the friction plate 11 may be a threaded connection manner, a clamping manner, or the like. This is not limited herein. For example, as shown in FIG. 3, the friction plate 11 is fastened to the piston 122 via a screw.

In this embodiment of this application, a shape of the friction plate 11 may be a circle, and an axis of the friction plate 11 is parallel to the first direction. Certainly, the shape of the friction plate 11 may alternatively be another shape, for example, a rectangle or another irregular shape. It may be understood that the first direction is perpendicular to a surface that is of the friction plate 11 and that faces the piston 122.

In some possible implementations, as shown in FIG. 3, the brake 10 may further include an accommodation housing 1216. The accommodation housing 1216 is fastened to an end that is of the piston cylinder 121 and that faces away from the friction plate 11. The accommodation housing 1216 includes a transmission opening 1212, and the transmission opening 1212 is configured to communicate the inside of the piston cylinder 121 with the inside of the accommodation housing 1216. The accommodation housing 1216 may be configured to accommodate the second transmission member 21 and the drive unit 22. The second transmission member 21 is in transmission connection to the first transmission member 123 via the transmission opening 1212.

In some possible implementations, the drive unit 22 may include a motor, and a motor shaft of the motor is connected to the second transmission member 21 of the brake 10. The motor may include an angle sensor, and the angle sensor is configured to output an angle signal based on a rotation angle and a rotation direction of the motor shaft of the motor.

A location of the piston 122 may be obtained based on the angle signal and the movement distance of the first transmission member 123, so that a location of the friction plate 11 may be obtained, and then the gap between the friction plate 11 and the brake disc 2 may be obtained. This helps improve precision of adjusting the gap between the friction plate 11 and the brake disc 2. In addition, the location of the first transmission member 123 may be further accurately detected. Furthermore, the location of the piston 122 may be further obtained.

In some possible implementations, as shown in FIG. 3, the braking system 3 may further include the controller 40. The controller 40 is electrically connected to the brake fluid apparatus 30, the drive unit 22, and the brake 10 separately. The controller 40 controls the brake fluid apparatus 30 and the drive unit 22, so that the brake 10 can implement different functions to meet different requirements. For example, the controller 40 controls the brake fluid apparatus 30 to control the brake fluid to enter and exit the brake cavity 171, so that the brake 10 can have a service braking function. The controller 40 controls an action of the drive unit 22 to enable the first transmission member 123 to rotate, so that the brake 10 can have a function of adjusting the gap between the friction plate 11 and the brake disc 2, a parking function, and the like. Certainly, functions of the brake 10 are not limited to the foregoing several functions.

It should be noted that, in addition to the controller 40 of the braking system 3, in some embodiments, the controller 40 may alternatively be a controller 40 of the vehicle 1. Alternatively, the controller 40 is a specially disposed controller 40.

In this embodiment of this application, a function of the brake fluid apparatus 30 is to inject the brake fluid into the brake cavity 171 of the brake 10. Therefore, a specific structure of the brake fluid apparatus 30 is not limited herein. For example, in some possible implementations, the brake fluid apparatus 30 may include a brake fluid pipeline 31, a first solenoid valve 32, a second solenoid valve 33, and an oil can 34. A first interface of the brake fluid pipeline 31 is configured to communicate with the fluid inlet opening 1211 of the brake 10, a second interface of the brake fluid pipeline 31 communicates with the oil can 34 via the first solenoid valve 32, and a third interface of the brake fluid pipeline 31 communicates with a first interface of the second solenoid valve 33. A second interface of the second solenoid valve 33 is configured to allow the brake fluid to enter and exit the brake fluid pipeline 31. The brake cavity 171 can communicate with the oil can 34 by controlling on and off of the first solenoid valve 32, so that when the piston 122 moves with a large stroke to enable a volume of the brake cavity 171 to be increased, the brake cavity 171 can be always filled with the brake fluid. In addition, the brake fluid in a braking master cylinder (communicates with the second interface of the second solenoid valve 33) may enter or flow out of the brake fluid pipeline 31 via the second solenoid valve 33, and then flow into the brake cavity 171, to implement service braking.

In the foregoing content, the brake 10 may include the pressure sensor 60, configured to detect pressure of the brake fluid. The pressure sensor 60 may be disposed on the brake fluid pipeline 31, and a magnitude of a hydraulic driving force acting on the piston 122 may be obtained by detecting the pressure of the brake fluid in the brake fluid pipeline 31.

It should be noted that, in this embodiment of this application, the braking system 3 includes the brake fluid apparatus 30. However, in some embodiments, the braking system 3 may alternatively not include the brake fluid apparatus 30. In this case, the brake fluid apparatus 30 may be a brake fluid apparatus 30 of the vehicle 1. Correspondingly, the braking system 3 may include the drive unit 22 and the brake 10.

In this embodiment of this application, because the braking system 3 has parts such as the exhaust member 18, the pressure sensor 60, the motor with the angle sensor, and the displacement sensor 50, the braking system 3 may further have functions such as adaptive adjustment of the gap between the friction plate 11 and the brake disc 2, hydraulic oil replacement and air exhaust, and follow-up braking. With reference to a specific scenario, a working principle of the braking system 3 provided in this embodiment of this application is described below.

### Follow-up braking function:

Refer to FIG. 3. In a conventional service braking condition, brake fluid is injected into the brake cavity 171 via the brake fluid pipeline 31. When the brake fluid pushes the piston 122 to move leftward, the piston 122 drives the first transmission member 123 to move leftward together. In other words, the first transmission member 123 performs only translational movement together with the piston 122, to implement non-differentiated service braking. In a leftward translation process of the piston 122, a leftward translation distance of the first transmission member 123 is controlled within a specific stroke, that is, a spacing between the first transmission member 123 and the brake disc 2 is within a specific range. This can prevent the axial elastic part 161 from being compressed to a limit and not being normally used.

A translational distance of the first transmission member 123 may be monitored in real time by using the displacement signal output by the displacement sensor 50. When the translational distance of the first transmission member 123 exceeds a limit value, the drive unit 22 may drive, via the second transmission member 21, the first transmission member 123 to rotate, so that the relative spacing between the first transmission member 123 and the piston 122 is increased. This prevents the axial elastic part 161 from being compressed to the limit.

### Follow-up pre-parking function:

Refer to FIG. 3. In a conventional service braking condition, the first solenoid valve 32 is controlled to be turned off, the second solenoid valve 33 is controlled to be turned on, the brake fluid is injected into the brake cavity 171 via the brake fluid pipeline 31, and the piston 122 is driven to move leftward. When the piston 122 moves leftward, the first transmission member 123 is driven to move leftward together. After a leftward movement distance of the first transmission member 123 exceeds a preset distance, the drive unit 22 is controlled to drive, via the second transmission member 21, the first transmission member 123 to rotate, so that the relative spacing between the first transmission member 123 and the piston 122 is increased (for example, B in FIG. 3). In this way, a traveling distance required by the friction plate 11 can be reduced in a parking braking process. This can shorten parking braking time and improve parking efficiency. The leftward movement distance of the first transmission member 123 may be obtained through calculation based on the displacement signal output by the displacement sensor 50.

### Parking function:

Refer to FIG. 3. When parking needs to be performed after service braking ends, the drive unit 22 is controlled to drive, via the second transmission member 21 and the first transmission member 123, the piston 122 to move leftward, and the piston 122 pushes the friction plate 11 to move leftward until the friction plates 11 securely clamp the brake disc 2, to implement parking braking. When parking braking needs to be released, the drive unit 22 drives, via the first transmission member 123 and the second transmission member 21, the piston 122 to move rightward, so that the friction plates 11 no longer securely clamp the brake disc 2, to release parking braking.

### Brake caliper distance adaptive adjustment function:

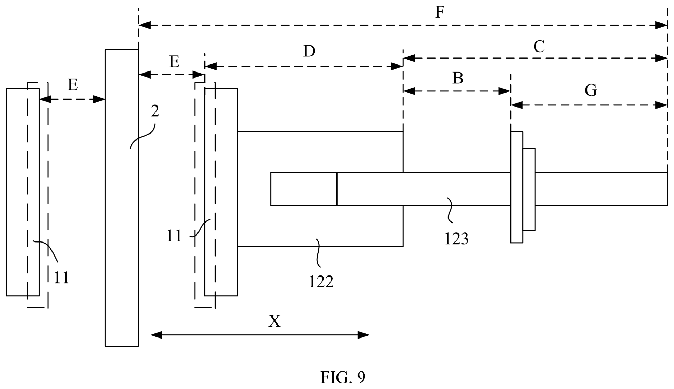

FIG. 9 is a diagram in which the friction plate 11 is worn out. After long-time service braking, as shown in FIG. 9, surfaces of the friction plates 11 are worn out (for example, dashed-line areas in rectangles in FIG. 9). As a result, gaps between the friction plates 11 and the brake disc 2 are increased, an empty braking stroke is increased, braking time is increased, a braking distance is increased, and a brake foot sense also changes. Furthermore, in addition to increases in the gaps between the friction plates 11 and the brake disc 2 caused by wear of the friction plates 11, a surface of the brake disc 2 may be worn out, or both the friction plates 11 and the brake disc 2 are worn out.

During parking braking, the controller 40 controls the first solenoid valve 32 to be turned on, and controls the second solenoid valve 33 to be turned off, so that the oil can 34 communicates with the brake cavity 171, and flow of brake fluid between the brake master cylinder and the brake cavity 171 is cut off. In addition, the controller 40 controls, based on the displacement signal output by the displacement sensor 50, the drive unit 22 to drive, via the second transmission member 21, the first transmission member 123 to rotate, so that the piston 122 moves rightward. In this way, the relative spacing between the piston 122 and the first transmission member 123 is increased, to reduce the gap between the friction plate 11 and the brake disc 2. After adjustment is completed, the first solenoid valve 32 is turned off, so that the gap between the friction plate 11 and the brake disc 2 is always the same in any non-braking state. This implements consistency of an empty basic braking stroke, shortens increased braking time and an increased braking distance that are caused by wear, and ensures that driving experience remains unchanged. A movement distance of the friction plate 11 can be accurately controlled based on the displacement signal, to ensure the gap between the friction plate 11 and the brake disc 2.

### Low drag quick reset function:

After service braking ends, the brake fluid changes from high pressure to low pressure, and the brake disc 2 is automatically separated from the friction plates 11 under an action of friction forces between the friction plates 11 and the brake disc 2. However, due to internal friction effect, the friction plates 11 cannot be separated quickly and at a constant distance from the brake disc 2, resulting in drag, wear, and an abnormal sound.

Refer to FIG. 3. After receiving a brake pedal signal, the controller 40 controls the first solenoid valve 32 to be turned off, and controls the second solenoid valve 33 to be turned on. The brake pedal signal is a signal indicating that a brake pedal of the vehicle 1 performs service braking release. Then, the drive unit 22 drives, via the first transmission member 123 and the second transmission member 21, the piston 122 to move rightward, so that the relative spacing between the piston 122 and the first transmission member 123 is reduced. In this way, the piston 122 is dragged to quickly retract. In a process in which the piston 122 quickly retracts, the brake fluid in the brake cavity 171 is driven to quickly enter the brake master cylinder (the second interface of the second solenoid valve 33 is connected to the brake master cylinder), to accelerate separation of the brake disc 2 from the friction plates 11. In this way, the friction plates 11 are quickly separated from the brake disc 2. In addition, the gap between the friction plate 11 and the brake disc 2 can be precisely controlled based on the displacement signal output by the displacement sensor 50. This reduces a basic braking drag torque and improves energy consumption of the entire vehicle.

### Zero roll resistance traveling function:

In a traveling process, movement distances of the piston 122 and the first transmission member 123 may be monitored based on the displacement signal output by the displacement sensor 50. However, in a specific working condition, for example, when the brake disc 2 is partially abraded or a foreign object is sandwiched between the brake disc 2 and the friction plate 11, the gap that is between the friction plate 11 and the brake disc 2 and that is obtained through calculation based on the displacement signal should meet a non-contact condition, but the friction plate 11 is still in partial contact with the brake disc 2. When the controller 40 receives the displacement signal sent by the displacement sensor 50, and does not receive a braking signal output by the brake pedal of the vehicle 1, the controller 40 controls the second solenoid valve 33 to be turned off, controls the first solenoid valve 32 to be turned on, and controls the drive unit 22 to drive, via the first transmission member 123 and the second transmission member 21, the piston 122 to translate rightward, so that the relative spacing between the first transmission member 123 and the piston 122 is reduced. In this way, the gap between the friction plate 11 and the brake disc 2 becomes larger. After adjustment is completed, the first solenoid valve 32 is controlled to be turned off, and the second solenoid valve 33 is controlled to be turned on, to complete hydraulic volume adjustment inside the brake cavity 171, and implement zero roll resistance traveling. This reduces operating noise, reduces braking energy consumption, and improves braking efficiency.

### Foreign object discharge during traveling function:

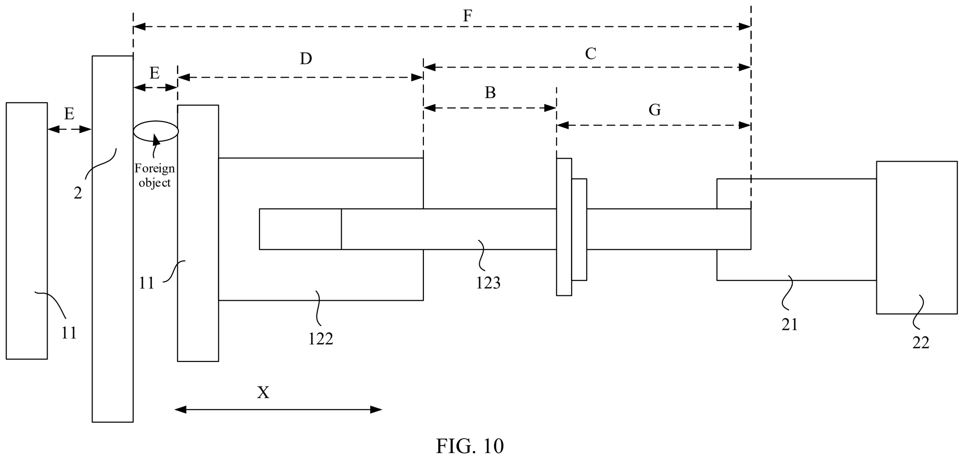

FIG. 10 is a diagram in which a foreign object enters between the friction plate 11 and the brake disc 2 in a traveling process. As shown in FIG. 10, in a traveling process of the vehicle 1, once a foreign object enters between the brake disc 2 and the friction plate 11, a friction torque of the brake disc 2 is increased, an abnormal sound is caused, and surfaces of the brake disc 2 and the friction plate 11 are damaged. Consequently, a service life of the friction plate 11 and the brake disc 2 is affected. In this working condition, after the gap between the friction plate 11 and the brake disc 2 is greater than a specified adaptive distance, the controller 40 controls, based on the displacement signal output by the displacement sensor 50, the drive unit 22 to work, and the drive unit 22 drives, via the first transmission member 123 and the second transmission member 21, the piston 122 to move rightward, so that the relative spacing between the first transmission member 123 and the piston 122 is reduced. In this way, the gap between the brake disc 2 and the friction plate 11 is increased, and further the foreign object can be discharged. In a next service braking process, a leftward movement distance of the piston 122 is detected based on the displacement signal output by the displacement sensor 50, so that the relative spacing between the piston 122 and the first transmission member 123 is adjusted after service braking is released. In this way, the gap between the friction plate 11 and the brake disc 2 is within a preset gap value, to implement an entire process in which the foreign object is discharged and a normal running state is restored. This reduces noise in a running process, reduces an energy loss, improves braking effect, avoids damage to a component, and prolongs a service life of the component.

### Friction plate 11 replacement and reset during parking function:

In a parking process, because the friction plate 11 is used for long time, the friction plate 11 cannot meet a basic requirement of daily service braking, and needs to be replaced. Refer to FIG. 3. The controller 40 controls the drive unit 22 to drive, via the first transmission member 123 and the second transmission member 21, the piston 122 to move rightward, to increase the gap between the friction plate 11 and the brake disc 2. This facilitates replacement of the friction plate 11. After replacement is completed, the controller 40 controls the drive unit 22 to output the driving force transmitted to the brake 10, and the brake 10 performs parking braking. The controller 40 recalculates a proper gap between the friction plate 11 and the brake disc 2 based on the displacement signal output by the displacement sensor 50, to implement automatic gap adjustment and calibration. In this way, even if thicknesses of replaced friction plates 11 are inconsistent, a consistent gap between the brake disc 2 and the friction plate 11 before and after replacement can also be ensured. This ensures that driving experience does not change.

### Redundant service braking and fault detection function:

When service braking fails, that is, after the brake pedal of the vehicle 1 sends a pressure building signal, when the pressure sensor 60 detects that the pressure of the brake fluid does not change, the braking system 3 automatically performs diagnosis and detection.

A process in which the braking system 3 performs diagnosis and detection is as follows: The controller 40 controls the drive unit 22 to drive, via the first transmission member 123 and the second transmission member 21, the piston 122 to move rightward, to reduce a volume of the brake cavity 171. The controller 40 determines, based on parameters such as the pressure signal output by the pressure sensor 60, the displacement signal output by the displacement sensor 50, and the angle signal output by the angle sensor, whether a pipeline of the brake fluid apparatus 30 leaks, and feeds back related fault information to a driver. When the pressure signal matches the displacement signal, it is considered that the pipeline of the brake fluid apparatus 30 is normal and not damaged, and the controller 40 controls the first solenoid valve 32 to be turned on, to ensure that the oil can 34 communicates with the brake cavity 171 and enter a redundant service braking function. That the pressure signal matches the displacement signal means that a pressure change of the brake fluid corresponds to a movement distance of the piston 122. When the pressure signal does not match the displacement signal, it is considered that the pipeline of the brake fluid apparatus 30 is faulty, a pipeline leakage indication is provided, and the redundant service braking function is entered.

When the braking system 3 performs the redundant braking function, the controller 40 controls, based on signals such as the displacement signal output by the displacement sensor 50, the pressure signal output by the pressure sensor 60, the angle signal output by the angle sensor, and a wheel speed signal output by a wheel speed sensor of the vehicle 1, the drive unit 22 to drive the first transmission member 123 to work, so that the piston 122 translates, to meet a service braking requirement. In addition, a service braking state is monitored through positive feedback of the foregoing signals such as the pressure signal, the angle signal, and the displacement signal, so that the driving force output by the drive unit 22 can temporarily replace the hydraulic driving force output by the brake fluid apparatus 30, to implement a basic function of service braking. In addition, in a braking process, the driving force output by the drive unit 22 may be trimmed based on the wheel speed signal, to prevent the braking wheel 5 from being locked. This improves safety of the braking system 3.

### Hydraulic oil replacement and air exhaust function:

In a process of replacing the brake 10 or the brake fluid, a hydraulic oil replacement and exhaust function is entered. Refer to FIG. 3. The exhaust bolt 181 is opened, and the drive unit 22 drives, via the first transmission member 123 and the second transmission member 21, the piston 122 to move rightward, so that a volume of the brake cavity 171 reaches a minimum, and the exhaust bolt 181 is closed. Then, an oil change process is performed. The controller 40 controls the first solenoid valve 32 to be turned on, so that the oil can 34 communicates with the brake cavity 171. In addition, the controller 40 controls the drive unit 22 to drive, via the first transmission member 123 and the second transmission member 21, the piston 122 to move leftward, the brake fluid in the oil can 34 is extracted into the brake cavity 171, and the brake fluid pushes the piston 122 to move leftward. After the volume of the brake cavity 171 reaches a maximum, the first solenoid valve 32 is controlled to be turned off, and the drive unit 22 is controlled to drive, via the first transmission member 123 and the second transmission member 21, the piston 122 to move rightward, so that pressure in the brake cavity 171 is increased. When the pressure sensor 60 detects that a pressure value in the brake cavity 171 reaches a specified discharge pressure value, the exhaust bolt 181 is loosened, and air in the brake cavity 171 is discharged. After the pressure in the brake cavity 171 is decreased, the piston 122 continues to move rightward for a distance, to discharge a part of the brake fluid in the brake cavity 171, so that air in the brake cavity 171 is completely exhausted. After the exhaust bolt 181 is locked, the controller 40 controls the drive unit 22 to drive, via the first transmission member 123 and the second transmission member 21, the piston 122 to continue reciprocating translation in the first direction, calculates pressure of the brake cavity 171 and a movement stroke of the piston 122, and compares the pressure of the brake cavity 171 with the movement stroke of the piston 122, to ensure complete air exhaust and brake fluid replacement.

### Hydraulic oil automatic replacement and air exhaust function:

Refer to FIG. 8. The controller 40 controls the exhaust solenoid valve 182 to be turned on, and the brake cavity 171 is connected to the outside. In addition, the controller 40 controls the drive unit 22 to drive, via the first transmission member 123 and the second transmission member 21, the piston 122 to move rightward until the volume of the brake cavity 171 reaches the minimum, that is, the piston 122 reaches a rightmost side, to exhaust air in the brake cavity 171. Then, the controller 40 controls the exhaust solenoid valve 182 to be turned off, so that the brake cavity 171 is separated from the outside, and the controller 40 controls the first solenoid valve 32 to be turned on, so that the oil can 34 communicates with the brake cavity 171. Further, the controller 40 controls the drive unit 22 to drive, via the first transmission member 123 and the second transmission member 21, the piston 122 to move leftward, to pump the brake fluid in the oil can 34 into the brake cavity 171, to implement automatic filling of the brake fluid. After the volume of the brake cavity 171 reaches the maximum, the brake cavity 171 is filled with the brake fluid. In this case, the controller 40 controls the exhaust solenoid valve 182, the first solenoid valve 32, and the second solenoid valve 33 to be turned off, and controls the drive unit 22 to drive, via the first transmission member 123 and the second transmission member 21, the piston 122 to move rightward. Whether air still remains in the brake cavity 171 is obtained through calculation by comparing the pressure value detected by the pressure sensor 60 with the movement distance of the piston 122. If there is residual air, the preceding operations are continued to exhaust the air.

An embodiment of this application further provides a control method applied to the braking system 3 in the foregoing content. The control method may include the following steps.

S11: Obtain a service braking signal, a preset relative spacing, and a current relative spacing between a first transmission member 123 and a piston 122. The service braking signal indicates that service braking needs to be performed on a vehicle 1.

The service braking signal may be obtained based on whether a pedal mechanism of the vehicle 1 outputs a pressure building signal, whether pressure of brake fluid changes, or the like. This is not limited herein. The current relative spacing may be obtained through calculation based on a displacement signal output by a displacement sensor 50.

S12: Control, based on the service braking signal, a brake fluid apparatus 30 to output a hydraulic driving force acting on the piston 122, to implement service braking.

Specifically, after it is learned, based on the service braking signal, that service braking needs to be performed, a first solenoid valve 32 of the brake fluid apparatus 30 is controlled to be turned off, and a second solenoid valve 33 of the brake fluid apparatus 30 is controlled to be turned on. In this way, the brake fluid may be injected into a brake cavity 171 to push the piston 122 to drive friction plates 11 to securely clamp a brake disc 2, to implement service braking. The hydraulic driving force acts on the piston 122 by using the brake fluid.

S13: Control, based on the current relative spacing and the preset relative spacing, a drive unit 22 to drive, via a second transmission member 21, the first transmission member 123 to rotate until the current relative spacing changes to a first target relative spacing.

Specifically, when the current relative spacing is less than or equal to the preset relative spacing, the drive unit 22 is controlled to drive, via the second transmission member 21, the first transmission member 123 to rotate until the current relative spacing changes to the first target relative spacing. When the current relative spacing is greater than the preset relative spacing, the piston 122 is configured to: receive the hydraulic driving force, and drive the first transmission member 123 to move in a first direction.

A relative spacing between the first transmission member 123 and the piston 122 is adjusted after the current relative spacing is less than or equal to the preset relative spacing, so that there is no need to perform continuous adjustment in a traveling process, and adjustment may be performed in a possible braking case like heavy braking or abrupt braking. This helps reduce wear of the first transmission member 123. In addition, when the current relative spacing is greater than the preset relative spacing, non-differentiated service braking may be further implemented. It may be understood that the preset relative spacing is less than the first target relative spacing. Therefore, the braking system 3 can implement a follow-up pre-parking function by including S11, S12, and S13.

In some possible implementations, the control method provided in this embodiment of this application may further include the following steps.

S21: Obtain a traveling exception signal and a determining signal.

The traveling exception signal indicates whether the friction plate 11 is in abnormal contact with the brake disc 2 in a traveling process of the vehicle 1. Whether the friction plate 11 is in abnormal contact with the brake disc 2 may be obtained through calculation based on the current relative spacing between the first transmission member 123 and the piston 122. The determining signal indicates whether the pedal mechanism of the vehicle 1 outputs a braking signal.

S22: Control, based on the traveling exception signal and the determining signal, the first solenoid valve 32 of the brake fluid apparatus 30 to be turned on and the second solenoid valve 33 to be turned off.

Specifically, when the traveling exception signal indicates whether the friction plate 11 is in abnormal contact with the brake disc 2 in the traveling process of the vehicle 1, and the pedal mechanism of the vehicle 1 does not output the braking signal, the first solenoid valve 32 is controlled to be turned on, and the second solenoid valve 33 is controlled to be turned off.

S23: Control, based on the traveling exception signal and the determining signal, the drive unit 22 to drive, via the second transmission member 21, the first transmission member 123 to rotate until the current relative spacing changes to a second target relative spacing; and control the first solenoid valve 32 of the brake fluid apparatus 30 to be turned off and the second solenoid valve 33 to be turned on.

Specifically, when the traveling exception signal indicates whether the friction plate 11 is in abnormal contact with the brake disc 2 in the traveling process of the vehicle 1, and the pedal mechanism of the vehicle 1 does not output the braking signal, the drive unit 22 is controlled to work, so that a gap between the friction plate 11 and the brake disc 2 is increased. Therefore, the braking system 3 can implement a zero roll resistance function by including S21, S22, and S23.

In some possible implementations, the control method provided in this embodiment of this application may further include the following steps.

S31: Obtain a service braking release signal.

The service braking release signal is a signal indicating whether service braking performed by the braking system 3 on the vehicle 1 ends.

S32: Control, based on the service braking release signal, the first solenoid valve 32 of the brake fluid apparatus 30 to be turned off and the second solenoid valve 33 to be turned on.

Specifically, after service braking ends by using the service braking release signal, the first solenoid valve 32 is controlled to be turned off, and the second solenoid valve 33 is controlled to be turned on.

S33: Control, based on the service braking release signal, the drive unit 22 to drive, via the second transmission member 21, the first transmission member 123 to rotate until the current relative spacing changes to a third target relative spacing.

Specifically, after service braking ends by using the service braking release signal, the drive unit 22 is controlled to work, so that the relative spacing between the first transmission member 123 and the piston 122 is reduced. In this way, the piston 122 quickly retracts, and the friction plate 11 can be quickly separated from the brake disc 2. Therefore, the braking system 3 can implement a low drag quick reset function by including S31, S32, and S33.

In some possible implementations, the control method provided in this embodiment of this application further includes the following steps.

S41: Obtain a fault indication signal and a control parameter.

The fault indication signal indicates whether the brake fluid apparatus 30 is faulty, and the control parameter includes a pressure signal, a displacement signal, and an angle signal.

S42: Control, based on the fault indication signal and the control parameter, the drive unit 22 to drive, via the second transmission member 21, the first transmission member 123 to rotate, to implement redundant service braking.

Specifically, after it is learned, by using the fault indication signal, that the brake fluid apparatus 30 is faulty, the braking system 3 enters a redundant service braking mode. When the braking system 3 is in the redundant service braking mode, the drive unit 22 is controlled, based on the control parameter, to work, to implement service braking and ensure traveling safety of the vehicle 1. In addition, a service braking status can be monitored by using positive feedback of the control parameter, to avoid a lock in a redundant service braking process. Therefore, the braking system 3 may implement a redundant service braking function by including S41 and S42.

In this embodiment of this application, before step S41 is performed, the control method provided in this embodiment of this application may further include the following steps.

S43: When a service braking failure signal is obtained, control a volume of the brake cavity 171 of a brake 10 to be reduced, and obtain a current displacement signal, pressure signal, and angle signal.

The service braking failure signal indicates that the brake pedal of the vehicle 1 sends the pressure building signal, but the pressure of the brake fluid in the braking system 3 remains unchanged.

S44: Generate a fault indication signal based on at least two of the current displacement signal, pressure signal, and angle signal.

For example, whether the brake fluid apparatus 30 is faulty is determined based on the displacement signal and the pressure signal. A movement distance of the piston 122 is obtained through calculation based on the displacement signal. If the movement distance of the piston 122 matches a pressure value corresponding to the pressure signal, the brake fluid apparatus 30 is not damaged. If the movement distance of the piston 122 cannot match a pressure value corresponding to the pressure signal, the brake fluid apparatus 30 is faulty.

Therefore, the braking system 3 may implement a redundant service braking and fault detection function by including S41, S42, S43, and S44.

In some possible implementations, the control method provided in this embodiment of this application may further include the following steps.

S51: Obtain a parking braking signal and a gap exception signal.

The parking braking signal indicates whether the vehicle 1 is in a parking state, and the gap exception signal indicates that the gap between the friction plate 11 and the brake disc 2 is greater than an adjustment threshold.

S52: Control, based on the parking braking signal, the first solenoid valve 32 of the brake fluid apparatus 30 to be turned on and the second solenoid valve to be turned off.

Specifically, when it is learned, by using the parking braking signal, that the vehicle 1 is in the parking state, the first solenoid valve 32 is controlled to be turned on, and the second electromagnetic valve is controlled to be turned off.

S53: Control, based on the parking braking signal and the gap exception signal, the drive unit 22 to drive, via the second transmission member 21, the first transmission member 123 to rotate until the current relative spacing changes to a fourth target relative spacing; and control the first solenoid valve 32 of the brake fluid apparatus 30 to be turned off.

Specifically, in a parking braking process of the vehicle 1, the movement distance of the piston 122 in the parking braking process may be monitored based on the current relative spacing, to obtain the gap between the friction plate 11 and the brake disc 2. Further, whether the gap between the friction plate 11 and the brake disc 2 is greater than the adjustment threshold may be obtained. When the gap between the friction plate 11 and the brake disc 2 is greater than the adjustment threshold, and the vehicle 1 is in the parking state, the drive unit 22 is controlled to work, so that the current relative spacing between the piston 122 and the first transmission member 123 changes to the fourth target spacing, to reduce the gap between the friction plate 11 and the brake disc 2. After the relative spacing is adjusted, the first solenoid valve 32 is turned off, so that the gap between the friction plate 11 and the brake disc 2 can be always the same in any non-braking state. This implements consistency of an empty basic braking stroke. Therefore, the braking system 3 may implement a brake caliper distance adaptive adjustment function by including S51, S52, and S53.

In some possible implementations, the control method provided in this embodiment of this application may further include the following steps.

S61: When a hydraulic oil replacement and air exhaust signal is obtained, control the exhaust vent 1213 of the brake 10 to be opened; control the drive unit 22 to drive, via the second transmission member 21, the first transmission member 123 to rotate until the volume of the brake cavity 171 of the brake 10 reaches a minimum; and control the exhaust vent 1213 of the brake 10 to be closed.

A manner of opening or closing the exhaust vent 1213 depends on a specific structure of an exhaust member 18 that seals the exhaust vent 1213. For example, when the exhaust member 18 is an exhaust bolt 181, the exhaust vent 1213 is manually opened or closed. When the exhaust member 18 is an exhaust solenoid valve 182, the exhaust vent 1213 may be automatically opened or closed. In addition, the brake fluid in the brake cavity 171 may be discharged by performing step S61, and a part of air in the brake cavity 171 may be further exhausted.

S62: When the volume of the brake cavity 171 reaches the minimum, control the first solenoid valve 32 of the brake fluid apparatus 30 to be turned on; control the drive unit 22 to drive, via the second transmission member 21, the first transmission member 123 to rotate until the volume of the brake cavity 171 reaches the maximum; and control the first solenoid valve 32 to be turned off.

The volume of the brake cavity 171 changes from the minimum to the maximum, so that the brake fluid in the oil can 34 of the brake fluid apparatus 30 can be pumped into the brake cavity 171, and further the brake fluid can be replaced.

S63: Control the drive unit 22 to drive, via the second transmission member 21, the first transmission member 123 to rotate, and obtain a current pressure value in the brake cavity 171.

The current pressure value may be obtained based on a pressure signal output by a pressure sensor 60. In addition, the drive unit 22 drives the first transmission member 123 to rotate, so that the volume in the brake cavity 171 can be reduced, and further the pressure value in the brake cavity 171 can be increased.

S64: Control, based on the current pressure value and a preset exhaust pressure value, the exhaust vent 1213 to be opened until the current pressure value is decreased to a target pressure value; and control the exhaust vent 1213 to be closed.

Specifically, when the current pressure value is greater than or equal to the preset exhaust pressure value, the exhaust vent 1213 is controlled to be opened until the current pressure value is decreased to the target pressure value, and the exhaust vent 1213 is controlled to be closed.

Therefore, the braking system 3 may implement a hydraulic oil replacement and air exhaust function by including S61, S62, S63, and S64.

In this embodiment of this application, to exhaust air in the brake cavity 171 as much as possible, after the current pressure value is decreased to the target pressure value, the method may further include step S65, that is, control the drive unit 22 to drive, via the second transmission member 21, the first transmission member 123 to rotate until the movement distance of the piston 122 is a target distance; and control the exhaust vent 1213 to be closed.

In some possible implementations, the control method provided in this embodiment of this application may further include the following steps.

S71: Obtain a traveling signal, a preset gap value between the friction plate 11 and the brake disc 2, and a current gap value between the friction plate 11 and the brake disc 2. The traveling signal indicates whether the vehicle 1 is in a traveling state.

S72: Control, based on the traveling signal, the current gap value, and the preset gap value, the drive unit 22 to drive, via the second transmission member 21, the first transmission member 123 to rotate, until the current gap value changes to a target gap value.

Specifically, when it is learned, by using the traveling signal, that the vehicle 1 is in the traveling state, it is determined, based on the current gap value and the preset gap value, whether to adjust the gap between the friction plate 11 and the brake disc 2. When the current gap value is equal to the preset gap value, the drive unit 22 is controlled to work, so that the current gap value changes to the target gap value. In this way, the gap between the friction plate 11 and the brake disc 2 is increased, and a foreign object between the friction plate 11 and the brake disc 2 can be discharged. It may be understood that an objective of the target gap value being greater than the preset gap value is to increase the gap between the friction plate 11 and the brake disc 2, so that a size of the foreign object is less than the gap between the friction plate 11 and the brake disc 2. Therefore, the braking system 3 may implement a foreign object discharge during traveling function by including S71 and S72.

An embodiment of this application further provides a computer-readable storage medium. The computer-readable storage medium stores computer-executable instructions. When the computer-executable instructions are executed by a processor, the control method for the braking system 3 is implemented. The computer-readable storage medium may include any medium that can store program code, for example, a USB flash drive, a removable hard disk, a read-only memory (ROM, Read-Only Memory), a random access memory (RAM, Random Access Memory), a magnetic disk, or an optical disc.

An embodiment of this application further provides a computer program product, including a computer program. When the computer program is executed by a processor, the control method for the braking system 3 is implemented.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A brake, comprising a friction plate, a piston, a piston cylinder, a first transmission member, and a second transmission member, wherein
the piston is disposed inside the piston cylinder, one end of the piston is connected to the first transmission member, the other end of the piston is fastened to the friction plate, and the friction plate is disposed outside the piston cylinder;
the second transmission member is in transmission connection to the first transmission member, the second transmission member is configured to connect to a drive unit, and the drive unit is configured to drive the second transmission member to rotate around a rotation axis parallel to a first direction; and
the first transmission member is configured to convert a rotational motion of the second transmission member into a linear motion of the piston in the first direction, and when the first transmission member moves in the first direction, the first transmission member is always in transmission connection to the second transmission member, and is always connected to the piston.

2. The brake according to claim 1, wherein an end that is of the piston and that faces away from the friction plate comprises a fitting hole, the first transmission member comprises a lead screw part, an axis of the lead screw part is parallel to the first direction, one end of the lead screw part is disposed inside the fitting hole and is connected to the piston, and the other end of the lead screw part is in transmission connection to the second transmission member.

3. The brake according to claim 2, wherein the end of the lead screw part is threadedly connected to the piston; or
the end of the lead screw part and the piston are configured to constitute a ball screw mechanism.

4. The brake according to any one of claims 1 to 3, wherein the second transmission member comprises a spline hole that penetrates the second transmission member, and an axis of the spline hole is parallel to the first direction; an end that is of the first transmission member and that is close to the second transmission member is disposed inside the spline hole and is in spline connection to the second transmission member; or
an outer wall of an end that is of the first transmission member and that is close to the second transmission member comprises a plurality of first grooves, each first groove extends in the first direction, and the plurality of first grooves are spaced apart in a circumferential direction of the first transmission member; and the second transmission member comprises a plurality of ball members and a third transmission member, the third transmission member is sleeved on an outer wall of the first transmission member and is configured to connect to the drive unit, an inner surface that is of the third transmission member and that faces the first transmission member comprises a plurality of second grooves, each second groove extends in an axial direction of the second transmission member, the plurality of second grooves are spaced apart in a circumferential direction of the second transmission member, the plurality of second grooves are respectively in a one-to-one correspondence with the plurality of first grooves and the plurality of ball members, and two opposite ends of each ball member are respectively disposed inside the corresponding first groove and inside the corresponding second groove.

5. The brake according to any one of claims 1 to 4, wherein the brake further comprises a plane bearing, the plane bearing is disposed inside the piston cylinder and is fastened to the piston cylinder, and the plane bearing is sleeved on the outer wall of the first transmission member and is movably connected to the first transmission member; and
the first transmission member comprises a first extension part extending in a radial direction of the first transmission member, the first extension part is disposed between the plane bearing and the piston in the first direction, and the first extension part is configured to abut against an end face of an end that is of the plane bearing and that faces the piston.

6. The brake according to any one of claims 1 to 5, wherein the brake further comprises an axial limiting mechanism, and the axial limiting mechanism is disposed inside the piston cylinder; and
when the first transmission member moves in the first direction, the axial limiting mechanism is configured to prevent the first transmission member from fluttering in the first direction.

7. The brake according to claim 6, wherein the axial limiting mechanism comprises an axial fitting part and an axial elastic part, the axial fitting part is fastened to an inner wall of the piston cylinder, an axis of the axial elastic part is parallel to an axis of the first transmission member, and two opposite ends of the axial elastic part are respectively connected to the axial fitting part and the outer wall of the first transmission member.

8. The brake according to any one of claims 1 to 7, wherein the brake further comprises a guiding mechanism, a part of the guiding mechanism is disposed in the piston cylinder, the other part of the guiding mechanism is disposed in the first transmission member, and the guiding mechanism is configured to enable the piston to translate in the first direction.

9. The brake according to claim 8, wherein the guiding mechanism is disposed inside the piston cylinder, the part of the guiding mechanism is disposed on the inner wall of the piston cylinder, and the other part of the guiding mechanism is disposed on the outer wall of the first transmission member.

10. The brake according to any one of claims 1 to 9, wherein the piston cylinder is of a hollow structure, and an axis of the piston cylinder is parallel to an axis of the friction plate;
an outer wall of the piston and the inner wall of the piston cylinder jointly define a brake cavity with a variable volume, the piston cylinder comprises a fluid inlet opening in communication with the brake cavity, and the fluid inlet opening is configured for brake fluid to enter and exit the brake cavity; and
the friction plate and the second transmission member are disposed outside the piston cylinder, the part of the first transmission member is disposed inside the piston cylinder, and the other part of the first transmission member is disposed outside the piston cylinder and is in transmission connection to the second transmission member.

11. The brake according to claim 10, wherein a limiting structure is provided between the piston and the piston cylinder, and the limiting structure is configured to determine a relative location between the piston and the piston cylinder when the piston moves in the first direction, for the volume of the brake cavity to reach a minimum.

12. The brake according to claim 10 or 11, wherein the piston cylinder further comprises an exhaust vent in communication with the brake cavity, and the exhaust vent is configured to exhaust air in the brake cavity; and
the brake further comprises an exhaust member, and the exhaust member is configured to control opening and closing of the exhaust vent.

13. The brake according to claim 12, wherein the exhaust member is an exhaust bolt, and the exhaust bolt is inserted into the exhaust vent and is threadedly connected to the piston cylinder; or
the exhaust member is an exhaust solenoid valve, the exhaust solenoid valve is connected to the exhaust vent and is configured to electrically connect to a controller, and the controller is configured to control on and off of the exhaust solenoid valve to control opening and closing of the exhaust vent.

14. The brake according to any one of claims 10 to 13, wherein the brake further comprises a pressure sensor, and the pressure sensor is configured to output a pressure signal based on pressure of the brake fluid.

15. The brake according to any one of claims 1 to 14, wherein the brake further comprises a displacement sensor, the displacement sensor is fastened to the piston cylinder, and the displacement sensor is configured to output a displacement signal based on movement of the first transmission member in the first direction.

16. A braking system, comprising a drive unit and the brake according to any one of claims 1 to 15, wherein the drive unit is connected to the second transmission member of the brake.

17. The braking system according to claim 16, wherein the drive unit comprises a motor, and a motor shaft of the motor is connected to the second transmission member of the brake; and
the motor comprises an angle sensor, and the angle sensor is configured to output an angle signal based on a rotation angle and a rotation direction of the motor shaft of the motor.

18. The braking system according to claim 16 or 17, wherein the braking system further comprises a brake fluid apparatus, the brake fluid apparatus communicates with the fluid inlet opening of the brake, and the brake fluid apparatus is configured to control the brake fluid to enter and exit the brake cavity of the brake.

19. The braking system according to claim 18, wherein the brake fluid apparatus comprises a brake fluid pipeline, a first solenoid valve, a second solenoid valve, and an oil can;
a first interface of the brake fluid pipeline is configured to communicate with the fluid inlet opening of the brake, a second interface of the brake fluid pipeline communicates with the oil can via the first solenoid valve, and a third interface of the brake fluid pipeline communicates with a first interface of the second solenoid valve; and
a second interface of the second solenoid valve is configured to allow the brake fluid to enter and exit the brake fluid pipeline.

20. The braking system according to any one of claims 16 to 19, wherein the braking system further comprises the controller, and the controller is electrically connected to the drive unit and the brake separately, and is configured to electrically connect to the brake fluid apparatus.

21. A vehicle, comprising wheels and the braking system according to any one of claims 16 to 20, wherein the braking system is configured to brake the wheels.

22. A control method, applied to a braking system, wherein the braking system comprises a brake fluid apparatus, a drive unit, and the brake according to any one of claims 1 to 16, the brake comprises the friction plate, the piston, the first transmission member, and the second transmission member, the friction plate and the piston are disposed side by side in the first direction, one end of the piston is fastened to the friction plate, the other end of the piston is connected to the first transmission member, the first transmission member is in transmission connection to the second transmission member, and the second transmission member is connected to the drive unit; and
the control method comprises:
obtaining a service braking signal, a preset relative spacing, and a current relative spacing between the first transmission member and the piston, wherein the service braking signal indicates that service braking needs to be performed on a vehicle;
controlling, based on the service braking signal, the brake fluid apparatus to output a hydraulic driving force acting on the piston, to implement service braking; and
controlling, based on the current relative spacing and the preset relative spacing, the drive unit to drive, via the second transmission member, the first transmission member to rotate until the current relative spacing changes to a first target relative spacing.

23. The method according to claim 22, wherein controlling, based on the current relative spacing and the preset relative spacing, the drive unit to drive, via the second transmission member, the first transmission member to rotate until the current relative spacing changes to the first target relative spacing comprises:
when the current relative spacing is less than or equal to the preset relative spacing, controlling the drive unit to drive, via the second transmission member, the first transmission member to rotate until the current relative spacing changes to the first target relative spacing; or
when the current relative spacing is greater than the preset relative spacing, the piston is configured to: receive the hydraulic driving force, and drive the first transmission member to move in the first direction.

24. The method according to claim 22, wherein the brake fluid apparatus comprises a brake fluid pipeline, a first solenoid valve, a second solenoid valve, and an oil can, a first interface of the brake fluid pipeline communicates with the fluid inlet opening of the brake, a second interface of the brake fluid pipeline communicates with the oil can via the first solenoid valve, a third interface of the brake fluid pipeline communicates with a first interface of the second solenoid valve, and a second interface of the second solenoid valve is configured to allow the brake fluid to enter or exit the brake fluid pipeline; and
the control method further comprises:
obtaining a traveling exception signal and a determining signal, wherein the traveling exception signal indicates whether the friction plate is in abnormal contact with the brake disc in a traveling process of a vehicle, and the determining signal indicates whether a pedal mechanism of the vehicle outputs a braking signal;
controlling, based on the traveling exception signal and the determining signal, the first solenoid valve of the brake fluid apparatus to be turned on and the second solenoid valve to be turned off; and
controlling, based on the traveling exception signal and the determining signal, the drive unit to drive, via the second transmission member, the first transmission member to rotate until the current relative spacing changes to a second target relative spacing; and controlling the first solenoid valve of the brake fluid apparatus to be turned off and the second solenoid valve to be turned on.

25. The method according to claim 22, wherein the control method further comprises:
obtaining a service braking release signal, wherein the service braking release signal is a signal indicating whether service braking performed by the braking system on the vehicle ends;
controlling, based on the service braking release signal, the first solenoid valve of the brake fluid apparatus to be turned off and the second solenoid valve to be turned on; and
controlling, based on the service braking release signal, the drive unit to drive, via the second transmission member, the first transmission member to rotate until the current relative spacing changes to a third target relative spacing.

26. The method according to claim 22, wherein the drive unit comprises a motor having an angle sensor, the angle sensor outputs an angle signal when the motor works, the brake further comprises the pressure sensor and the displacement sensor, the pressure sensor is configured to output the pressure signal based on the pressure of the brake fluid, and the displacement sensor is configured to output the displacement signal based on the movement of the first transmission member in the first direction; and
the control method further comprises:
obtaining a fault indication signal and a control parameter, wherein the fault indication signal indicates whether the brake fluid apparatus is faulty, and the control parameter comprises the pressure signal, the displacement signal, and the angle signal; and
controlling, based on the fault indication signal and the control parameter, the drive unit to drive, via the second transmission member, the first transmission member to rotate, to implement redundant service braking.

27. The method according to claim 26, wherein before obtaining the fault indication signal and the control parameter, the method further comprises:
when a service braking failure signal is obtained, controlling a volume of the brake cavity of the brake to be reduced, and obtaining the current displacement signal, pressure signal, and angle signal, wherein the service braking failure signal indicates that a brake pedal of the vehicle sends a pressure building signal, but the pressure of the brake fluid in the braking system remains unchanged; and
generating the fault indication signal based on at least two of the current displacement signal, pressure signal, and angle signal.

28. The method according to claim 22, wherein the control method further comprises:
obtaining a parking braking signal and a gap exception signal, wherein the parking braking signal indicates whether the vehicle is in a parking state, and the gap exception signal indicates that a gap between the friction plate and the brake disc is greater than an adjustment threshold;
controlling, based on the parking braking signal, the first solenoid valve of the brake fluid apparatus to be turned on and the second solenoid valve to be turned off; and
controlling, based on the parking braking signal and the gap exception signal, the drive unit to drive, via the second transmission member, the first transmission member to rotate until the current relative spacing changes to a fourth target relative spacing; and controlling the first solenoid valve of the brake fluid apparatus to be turned off.

29. The method according to claim 22, wherein the control method further comprises:
when a hydraulic oil replacement and air exhaust signal is obtained, controlling the exhaust vent of the brake cavity to be opened; controlling the drive unit to drive, via the second transmission member, the first transmission member to rotate until a volume of the brake cavity reaches a minimum; and controlling the exhaust vent of the brake cavity to be closed;
when the volume of the brake cavity reaches the minimum, controlling the first solenoid valve of the brake fluid apparatus to be turned on; controlling the drive unit to drive, via the second transmission member, the first transmission member to rotate until the volume of the brake cavity reaches a maximum; and controlling the first solenoid valve to be turned off;
controlling the drive unit to drive, via the second transmission member, the first transmission member to rotate, and obtaining a current pressure value in the brake cavity; and
controlling, based on the current pressure value and a preset exhaust pressure value, the exhaust vent to be opened until the current pressure value is decreased to a target pressure value; and controlling the exhaust vent to be closed.

30. The method according to claim 29, wherein after the current pressure value is decreased to the target pressure value, the method further comprises:
controlling the drive unit to drive, via the second transmission member, the first transmission member to rotate until a movement distance of the piston is a target distance; and controlling the exhaust vent to be closed.

31. The method according to claim 22, wherein the control method further comprises:
obtaining a traveling signal, a preset gap value between the friction plate and the brake disc, and a current gap value between the friction plate and the brake disc, wherein the traveling signal indicates whether the vehicle is in a traveling state; and
controlling, based on the traveling signal, the current gap value, and the preset gap value, the drive unit to drive, via the second transmission member, the first transmission member to rotate, until the current gap value changes to a target gap value.

32. A computer-readable storage medium, wherein the computer-readable storage medium stores computer-executable instructions, and when the computer-executable instructions are executed by a processor, the method according to any one of claims 22 to 31 is implemented.

33. A computer program product, comprising a computer program, wherein when the computer program is executed by a processor, the method according to any one of claims 22 to 31 is implemented.
